# EUROPEAN PATENT SPECIFICATION

(11) **EP 2 393 658 B1**
(45) Date of publication and mention of the grant of the patent: **30.03.2016**
(21) Application number: 10703725.1
(22) Date of filing: 25.01.2010
(51) Int. Cl.: B32B 27/36, B32B 27/18

(54) **TRANSPARENT MULTILAYERED CARBONATE ARTICLES AND METHOD TO MANUFACTURE THEREOF**
TRANSPARENTE MEHRSCHICHTIGE CARBONAT-GEGENSTÄNDE UND HERSTELLUNGSVERFAHREN DAFÜR
ARTICLES DE CARBONATE MULTICOUCHES TRANSPARENTS ET PROCEDE DE PREPARATION

(30) Priority: 09.02.2009 US 150897 P
(43) Date of publication of application: 14.12.2011
(73) Proprietor: Trinseo Europe GmbH, 8810 Horgen (CH)
(72) Inventor: VAN NUFFEL, Claude, B-9041 Oostakker (BE); VREYS, Mark, B-9041 Oostakker (BE)
(74) Representative: Hoffmann Eitle
(86) International application number: PCT/US2010/021978
(87) International publication number: WO 2010/090893

(56) References cited:
- EP-A1- 1 724 110
- EP-A2- 0 716 919
- DE-T2- 69 426 915
- US-A- 5 098 790
- US-A1- 2007 048 519

## Description

### BACKGROUND OF THE INVENTION

The present invention relates to a multilayer article and methods to manufacture, in particular, a multilayer thermoplastic carbonate sheet or multilayer thermoplastic carbonate film with improved transparency for absorption of infrared radiation and methods to manufacture thereof.

Absorption of excessive amounts of solar radiation by the interior surfaces of a vehicle, residential home or office building can result in elevated interior temperatures, reduced comfort for the occupants, accelerated degradation of interior materials, and an increase in the requirement for larger air conditioning units. In vehicles especially, under high static-soak conditions, which can occur in vehicles parked in the hot summer sun, especially in a desert climate, surface temperature within a closed car can reach over 100°C, and the entire thermal mass of the car can be raised to high temperatures.

Increasing the cooling load of the air conditioning unit in a vehicle to ameliorate heat discomfort would go against the trend currently prevailing in the automobile industry. Automobile engines are being downsized to reduce weight and improve fuel efficiency and are less able to handle the power drain of the larger air conditioners. A recent concern to industry and Government is the role played by automotive air conditioners as a source of chlorofluorocarbons (CFC) released into the atmosphere, increased cooling load will lead to even larger air conditioning units, which will exacerbate this problem.

In an attempt to reduce the heat build-up and the consequent increase in temperatures in automobiles, buildings, and the like, there have been attempts to include inorganic infrared (IR) absorbing additives into transparent materials that are used as windows. These IR absorbing additives are typically metal salts of borides. This solution however is not successful, in that, the inorganic IR absorbing additives suffer from a lack of hydrolytic stability and degrade over time. Attempts to improve hydrolytic stability by combining such IR absorbing additives directly with ultraviolet (UV) absorbing additives, for example see US 2005/0165148A1; 2005/0095433A1; 2007/0015081A1; and EP 1865027, have resulted in less than desirable transparency, i.e., variations in light transition, undesired color, haze, opacity, and the like. Thus, there is a need for new technologies and passive design solutions, which would lead to long term reduced solar heat loads in automobiles, residential and office buildings, and the like.

EP 1 724 110 A1 relates to a multilayered sheet comprising a core layer comprising a thermoplastic polymer and an IR absorbing additive, and a first cap layer comprising a thermoplastic polymer and an electromagnetic radiation absorbing additive, wherein a surface of the first cap layer is disposed upon and in intimate contact with a surface of the core layer.

US 5 098 790 A is concerned with a synthetic resin panel consisting of a core layer of polycarbonate resin covered on at least one its outer sides by a storage layer containing an UV absorber, and on that side of said storage layer facing away from said core layer, by a cover layer of synthetic resin containing an UV absorber.

EP 0 716 919 A2 relates to UV-protected, multilayer polycarbonate sheets containing a base sheet, at least one outer layer and optionally at least one additional protective layer.

DE 694 26 915 T2 describes a process for the manufacture of a polycarbonate sheet by coextrusion of a polycarbonate coating layer and a polycarbonate core layer.

US 2007/048519 A1 relates to solar control laminates comprising a solar control film and a polymeric sheet. The solar control film comprises a polymeric film coated with a coating comprising inorganic infrared absorbing nanoparticles. Optionally, the solar control laminate also comprises a rigid sheet, such as a glass sheet.

### SUMMARY OF THE INVENTION

In one embodiment, the above requirements are met by a transparent multilayered article, preferably a multilayered film, a multilayered sheet, or a multilayered composition comprising one or more film and one or more sheet, preferably having at least three layers **1**: a core layer **10**, a first layer **20**, and a second layer **30**. The core layer comprises a first carbonate polymer composition comprising a first carbonate polymer and optionally one or more additive selected from an IR absorbing additive, an UV absorbing additive, an antioxidant, an optical brightener, a thermal stabilizer, a mold release agent, a dye, and/or any other additive commonly used in a carbonate polymer wherein the core layer may contain either an IR absorbing additive or an UV absorbing additive, but not both. Preferably the core layer does not contain an IR absorbing additive. The core layer has a thickness **11**, a first surface **13** and a second surface **12**, for example, in the case of a sheet, the first **13** and second **12** surface lie in the plane defined by the direction of extrusion and the width of the sheet, sometimes these surfaces are referred to as top (e.g., first) and bottom (e.g., second) surfaces.

The first layer **20** (a first IR layer) comprises a second carbonate polymer composition comprising a second carbonate polymer, one or more IR absorbing additive, one or more dye, and optionally one or more additive, for example an antioxidant, a thermal stabilizer, a mold release agent, or the like, wherein the first layer preferably does not contain a UV absorbing additive. The first layer has a thickness **21**, a first surface **22** and a second surface **23** as defined herein above.

The second layer **30** (a first UV layer) comprises a third carbonate polymer composition comprising a third carbonate polymer, one or more UV absorbing additive and optionally one or more additive, for example, an antioxidant, an optical brightener, one or more dye, a thermal stabilizer, a mold release, or the like, wherein the second layer preferably does not contain an IR absorbing additive. The second layer has a thickness **31**, a first surface **32** and a second surface **33** as defined herein above.

The first carbonate polymer, second carbonate polymer, and the third carbonate polymer may independently be the same or different carbonate polymers.

In a preferred embodiment, the first layer **20** is disposed between the core layer **10** and the second layer **30** such that a first surface **22** of the first layer **20** is in intimate contact with a first surface **13** of the core layer **10** and a second surface **23** of the first layer **20** is in intimate contact with a first surface **32** of the second layer **30**.

In another embodiment of the present invention, the transparent multilayered article described herein above is a four layer multilayered article **2** comprising the three layered multilayered article described herein above further comprising in addition to the core, first, and second layers a third layer **40** (a second UV layer) having a thickness **41**, a first surface **43** and a second surface **42** comprising a fourth carbonate polymer composition comprising a fourth carbonate polymer, one or more UV absorbing additive and optionally one or more additive, for example, an antioxidant, an optical brightener, a thermal stabilizer, one or more dye, a mold release, or the like, wherein the second layer preferably does not contain an IR absorbing additive; wherein the first surface **43** of the third layer **40** is disposed upon and in intimate contact with the second surface **12** of the core layer **10**. In a four layered multilayered article, the fourth carbonate polymer composition may be the same as or different that the first or second carbonate polymer composition. The fourth carbonate polymer may be the same as or different from the core, first, or second carbonate polymer.

In yet another embodiment of the present invention, the transparent multilayered article described herein above is a five layered multilayered article **3** comprising the four layered multilayered article described herein above further comprising in addition to the core, first, second, and third layers a fourth layer **50** (a second IR layer) having a thickness **51**, a first surface **53** and a second surface **52**. The fourth layer comprises a fifth carbonate polymer composition comprising a fifth carbonate polymer, one or more IR absorbing additive, one or more dye, and optionally one or more additive, for example an antioxidant, a thermal stabilizer, a mold release agent, or the like, wherein the fifth layer preferably does not contain a UV absorbing additive; wherein the fourth layer **50** is disposed between the core layer **10** and the third layer **40** such that the first surface **53** of the fourth layer **50** is in intimate contact with the second surface **12** of the core layer **10** and the second surface **52** of the fourth layer **50** is in intimate contact with the first surface **43** of the third layer **40**. In a five layer multilayered article, the fifth carbonate polymer composition may be the same as or different than the third carbonate polymer composition. The fifth carbonate polymer may be the same as or different from the first, second, third, or fourth carbonate polymer. In a five layer multilayered article, the fourth carbonate polymer composition may be the same as or different than the second carbonate polymer composition. In a preferred embodiment, the fifth carbonate polymer composition is the same as the second carbonate polymer composition and the fourth carbonate polymer composition is the same as the third carbonate polymer composition.

Preferably, there are at least three layers in the multilayered article of the present invention. However, the number of layers in the multilayer article of the present invention is not limited. In other words, the multilayered article of the present invention may have 3, 4, 5, 6, 7, 8, 9, 10, or more layers depending on the needs of the specific application. In like manner for the layers described hereinabove, any additional layer comprises a carbonate polymer, which may be the same or different form the carbonate polymers in the other layers, and an additive commonly used in transparent carbonate polymer articles such as those described herein above. Preferably, the multilayered article of the present invention does not comprise a layer which contains both an IR absorbing additive and an UV absorbing additive.

In one embodiment, the IR absorbing additive in the multilayered article described herein above is a metal boride; cesium oxides, such as cesium tungsten oxide; antimony-doped tin oxide particles; zinc oxide particles containing at least one element selected from In, Ga, Al, or Sb; tin-doped indium oxide particles; a phthalocyanine-based composition; a naphthalocyanine-based composition; copper sulfide; or a copper ion compound.

In another embodiment, the IR absorbing additive in the multilayered article described herein above is lanthanum boride (LaB₆), praseodymium boride (PrB₆), neodymium boride (NdB₆), cerium boride (CeB₆), gadolinium boride (GdB₆), terbium boride (TbB₆), dysprosium boride (DyB₆), holmium boride (HoB₆), yttrium boride (YB₆), samarium boride (SmB₆), europium boride (EuB₆), erbium boride (ErB₆), thulium boride (TmB₆), ytterbium boride (YbB₆), lutetium boride (LuB₆), strontium boride (SrB₆), calcium boride (CaB₆), titanium boride (TiB₂), zirconium boride (ZrB₂), hafnium boride (HfB₂), vanadium boride (VB₂), tantalum boride (TaB₂), a chromium borides (CrB and CrB₂), a molybdenum borides (MoB₂, Mo₂B₅ and MoB), tungsten boride (W₂B₅), or combinations thereof. Preferably IR absorbing additive is lanthanum boride (LaB₆). Preferably, the IR absorbing additive is present in an amount of from 0.02 ppm to 3000 ppm based on the total weight of the carbonate polymer composition for which it is in, i.e., the first IR layer composition (e.g., the first layer or second carbonate polymer composition) or the second IR layer composition (e.g., the third layer or the fourth carbonate polymer composition).

In another embodiment, the multilayered article described herein above wherein the first, second and/or fourth carbonate polymer composition or preferably any layer comprising an IR absorber comprises one or more dye, wherein each dye is independently present in an amount of from 1 ppm to 10,000 ppm based on the total weight of the carbonate polymer composition for which it is in.

In another embodiment, the multilayered article described herein above wherein the first, third, and/or fifth carbonate polymer composition comprises one or more UV absorbing additive selected from a benzotriazole compound, a triazine compound, a benzophenone compound, a cyanoacrylate compound, a salicylate compound, or combinations thereof, preferably, the one or more UV absorbing additive in the third carbonate polymer composition is 1,3-bis-[(2'-cyano-3',3'-diphenylacryloyl) oxy]-2,2-bis-[(2-cyano-3',3'-diphenylacryloyl) oxy] methyl) propane; 2,2'-methylen-bis-(6-{2H-benzotriazol-2-yl}-4-{1,1,3,3-tetramethylbutyl}-phenol); 2-(4,6-diphenyl-1,3,5-triazin-2-yl)-5-hexyloxyphenol, or combinations thereof. The one or more UV absorbing additive is independently present in an amount of from 1 to 15 weight percent based on the total weight of the carbonate polymer composition for which it is in, e.g., the core, first UV layer (e.g., second layer **30**) and/or the second UV layer (e.g., fourth layer **40**). Preferably, the one or more UV absorbing additive independently has a molecular weight equal to or greater than 400 g/mol.

In another embodiment, the multilayered article described herein above wherein the first, second, third, fourth and/or fifth carbonate polymer composition comprises a thermal stabilizer wherein the thermal stabilizer is a phosphite, a phosphonate, a phosphine, a hindered amine, a hydroxylamine, a phenol, an acryloyl modified phenol, a hydroperoxide decomposer, a benzofuranone derivative, or combinations thereof.

In another embodiment, the multilayered article described herein above wherein the first, second, third, fourth and/or fifth carbonate polymer composition comprises a mold release wherein the mold release is an aliphatic carboxylic acid, an ester of an aliphatic carboxylic acid and an aliphatic alcohol, an aliphatic hydrocarbon compound having a number-average molecular weight of 200 to 15000 or a polysiloxane-based silicone oil.

In another embodiment, the multilayered articles described herein above wherein the first, second, third, fourth and/or fifth carbonate polymer are a bis-phenol A polycarbonate.

In another embodiment, the multilayered articles described herein above wherein the first and/or fourth layer has a thickness of from 50 micrometers to 250 micrometers and the second and/or third layer has a thickness of from 30 micrometers to 70 micrometers.

In another embodiment, the present invention is a method for manufacturing a transparent multilayered article comprising the steps of (i) disposing onto a surface of a core layer, said core layer comprising a first carbonate polymer composition comprising a first carbonate polymer and optionally one or more additive selected from an IR absorbing additive, an UV absorbing additive, an antioxidant, an optical brightener, a thermal stabilizer, a mold release agent, and/or one or more dye, wherein the core layer may contain either an IR absorbing additive or an UV absorbing additive, but not both, a first layer, said first layer comprising a second carbonate polymer composition comprising a second carbonate polymer, one or more IR absorbing additive, one or more dye, and optionally one or more additive selected from an antioxidant, a thermal stabilizer, and/or a mold release agent, wherein the first layer does not contain an UV absorbing additive; and (ii) disposing a second layer, said second layer comprising a third carbonate polymer composition comprising a third carbonate polymer composition comprising a third carbonate polymer, one or more UV absorbing additive and optionally one or more additive selected from an antioxidant, an optical brightener, a thermal stabilizer, a mold release, and/or one or more dye, wherein the second layer does not contain an IR absorbing additive, onto a surface of the first layer which is opposite the surface of the first layer which is contacting the surface of the core layer.

In another embodiment, the present invention is the method described herein above further comprising the step of (iii) disposing a third layer, said third layer comprising a fourth carbonate polymer composition comprising a fourth carbonate polymer, one or more UV absorbing additive, and optionally one or more additive selected from an antioxidant, an optical brightener, a thermal stabilizer, and/or a mold release; wherein the third layer does not contain an IR absorbing additive, onto a surface of the core layer opposite the surface whereon the first layer is disposed.

In another embodiment, the present invention is the method described directly herein above further comprising the step of (iv) disposing a fourth layer, said fourth layer comprising a fifth carbonate polymer composition comprising a fifth carbonate polymer, one or more IR absorbing additive, one or more dye, and optionally one or more additive selected from an antioxidant, a thermal stabilizer, and/or a mold release agent, wherein the fourth layer does not contain an UV absorbing additive, in between the core layer and the third layer such that the fourth layer is disposed on a surface of the core layer opposite the surface whereon the first layer is disposed and a surface of the third layer.

Preferably, in the method of the present invention the disposing of the layers is conducted in a two or three roll mill, alternatively the disposing of the layers is conducted by coextrusion, alternatively the disposing of the layers is conducted by lamination, in yet alternative the method of the present invention disposing of the layers is conducted by a combination of coextrusion and lamination.

### BRIEF DESCRIPTION OF THE DRAWINGS

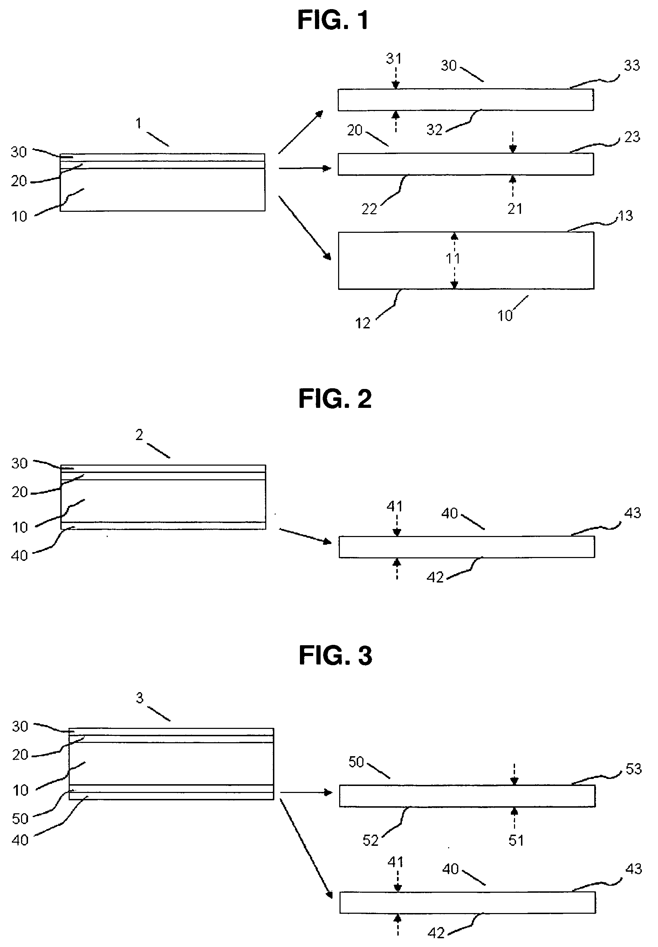

**FIG. 1** is a schematic depicting a multilayered article of the invention having three layers wherein a first layer is disposed onto a core layer, and a second layer disposed onto the first layer wherein the first layer is disposed between the core layer and the second layer.
**FIG. 2** is a schematic depicting a multilayered article of the invention having four layers wherein a first layer is disposed onto a core layer and a second layer disposed onto the first layer wherein the first layer is disposed between the core layer and the second layer and a fourth layer is disposed on the opposite side of the core layer from which the first layer is disposed.
**FIG. 3** is a schematic depicting a multilayered article of the invention having five layers wherein a first layer is disposed onto a core layer and a second layer disposed onto the first layer wherein the first layer is disposed between the core layer and the second layer and a fourth layer is disposed on the opposite side of the core layer from which the first layer is disposed and a third layer is disposed onto the fourth layer wherein the fourth layer is disposed between the core layer and the third layer.

### DETAILED DESCRIPTION OF THE INVENTION

### Carbonate Polymer

The layers of the multilayer article of the present invention comprise a thermoplastic carbonate polymer. The carbonate polymer of the present invention is a thermoplastic aromatic polycarbonate and/or aromatic polyester carbonate. Suitable aromatic polycarbonates and/or aromatic polyester carbonates according to the invention are known from the literature or can be produced by methods known from the literature (for example, for the production of aromatic polycarbonates, see Schnell, "Chemistry and Physics of Polycarbonates", Interscience Publishers, 1964, as well as USP 3,028,365; 4,529,791; and 4,677,162. Suitable aromatic polyester carbonates are described in USP 3,169,121; 4,156,069; and 4,260,731.

The production of aromatic polycarbonates is effected, for example, by the reaction of diphenols with carbonic acid halides, preferably phosgene, and/or with aromatic dicarboxylic acid dihalides, preferably benzenedicarboxylic acid dihalides, by the phase boundary method, optionally with the use of chain terminators, e.g., monophenols, and optionally with the use of trifunctional branching agents or branching agents with a functionality higher than three, for example triphenols or tetraphenols.

Diphenols for the production of the aromatic polycarbonates and/or aromatic polyester carbonates are preferably those of formula II 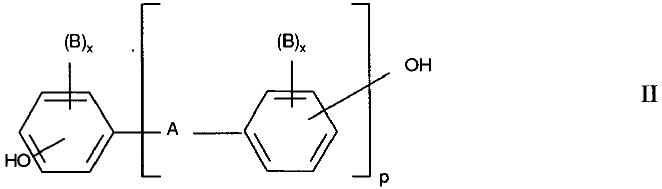 wherein A denotes a single bond, a C₁ - C₅ alkylene, a C₂ - C₅ alkylidene, a C₅ - C₆ cycloalkylidene, -O-, -SO-, -CO-, -S-, -SO₂-, or a C₆ - C₁₂ arylene, on to which other aromatic rings, which optionally contain hetero atoms, can be condensed, or a radical of formula III or IV 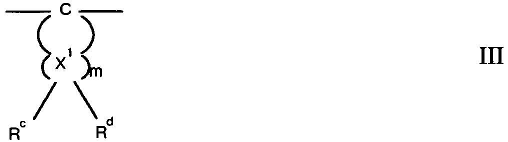 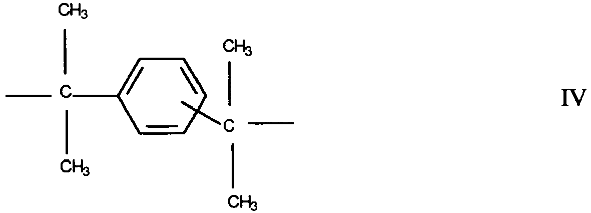
B in each case is independently hydrogen, a C₁ - C₁₂ alkyl, preferably methyl, or a halogen, preferably chlorine and/or bromine;
x in each case is mutually independently 0, 1, or 2;
p is 0 or 1;
R^{c} and R^{d} are mutually independent of each other and are individually selectable for each X¹ and are hydrogen or a C₁ - C₆ alkyl, preferably hydrogen, methyl or ethyl;
X¹ denotes carbon; and
m denotes an integer from 4 to 7, preferably 4 or 5, with the proviso that R^{c} and
R^{d} simultaneously denote an alkyl on at least one X₁ atom.

The preferred diphenols are hydroquinone, resorcinol, dihydroxybiphenyls, bis(hydroxyphenyl)-C₁ - C₅ alkanes, bis(hydroxyphenyl)-C₅ -C₆ cycloalkanes, bis(hydroxyphenyl)ethers, bis(hydroxyphenyl)sulfoxides, bis(hydroxyphenyl)ketones, bis(hydroxyphenyl)sulfones and alpha, alpha'-bis(hydroxyphenyl)diisopropylbenzenes, as well as derivatives thereof which have brominated and/or chlorinated nuclei.

Diphenols which are particularly preferred are 4,4'-dihydroxybiphenyl, bisphenol A, 2,4-bis(4-hydroxyphenyl)-2-methylbutane, 1,1-bis(4-hydroxyphenyl)-cyclohexane, 1,1-bis(4-hydroxyphenyl)-3,3,5-trimethylcyclohexane, 4,4-dihydroxydiphenyl sulfide and 4,4-dihydroxydiphenyl sulfone, as well as di- and tetrabrominated or chlorinated derivatives thereof, such as 2,2-bis(3-chloro-4-hydroxyphenyl)propane, 2,2-bis-(3,5-dichloro-4-hydroxyphenyl)propane or 2,2-bis(3,5-dibromo-4-hydroxyphenyl)propane. 2,2-bis-(4-hydroxyphenyl)propane (bisphenol A) is particularly preferred. The diphenols can be used individually or as arbitrary mixtures. The diphenols are known from the literature or can be obtained by methods known from the literature.

Examples of suitable chain terminators for the production of the aromatic polycarbonates include phenol, p-chlorophenol, p-tert-butylphenol or 2,4,6-tribromophenol, as well as long chain alkylphenols such as 4-(1,3-dimethyl-butyl)-phenol or monoalkylphenols or dialkylphenols which contain a total of 8 to 20 C atoms in their alkyl substituents, such as 3,5-di-tert-butyl-phenol, p-iso-octylphenol, p-tert-octylphenol, p-dodecylphenol, 2-(3,5-dimethylheptyl)-phenol and 4-(3,5-dimethylheptyl)-phenol. The amount of chain terminators used is generally between 0.1 mole percent and 10 mole percent with respect to the molar sum of the diphenols used in each case.

The aromatic polycarbonates and/or aromatic polyester carbonates of the present invention preferably have a mean weight average molecular weights of from 10,000 to 200,000 preferably 20,000 to 80,000. Unless otherwise indicated, the references to aromatic polycarbonate and/or aromatic polyester carbonate "molecular weight" herein refer to weight average molecular weights (M_{w}) determined by gel permeation chromatography (GPC) using laser scattering techniques with a bisphenol A polycarbonate standard and is given in units of grams per mole (g/mole).

The aromatic polycarbonates can be branched in the known manner, for example by the incorporation of 0.05 to 2.0 mole percent, with respect to the sum of the diphenols used, of trifunctional compounds or of compounds with a functionality higher than three, for example those which contain three or more phenolic groups. Branched polycarbonates suitable for the present invention can be prepared by known techniques, for example several suitable methods are disclosed in USP 3,028,365; 4,529,791; and 4,677,162.

Suitable branching agents that may be used are tri- or multi-functional carboxylic acid chlorides, such as trimesic acid trichloride, cyanuric acid trichloride, 3,3'-,4,4'-benzophenonetetracarboxylic acid tetrachloride, 1,4,5,8-naphthalene-tetracarboxylic acid tetrachloride or pyromellitic acid tetrachloride for example, in amounts of 0.01 to 1.0 mole percent (with respect to the dicarboxylic acid dichlorides used) or tri- or multi-functional phenols such as phloroglucinol, 4,6-dimethyl-2,4,6-tris(4-hydroxyphenyl)-2-heptene, 4,4-dimethyl-2,4,6-tris(4-hydroxyphenyl)heptane, 1,3,5-tris(4-hydroxyphenyl)benzene, 1,1,1-tris(4-hydroxyphenyl)ethane, tris(4-hydroxyphenyl)-phenyl-methane, 2,2-bis[4,4-bis(4-hydroxyphenyl)cyclohexyl]-propane, 2,4-bis[1-(4-hydroxyphenyl)-1-methylethyl]phenol, tetrakis(4-hydroxyphenyl)-methane, 2,6-bis(2-hydroxy-5-methyl-benzyl)-4-methyl-phenol, 2-(4-hydroxyphenyl)-2-(2,4-dihydroxyphenyl)propane, or tetrakis(4-[1-(4-hydroxyphenyl)-1-methylethyl]-phenoxy)-methane in amounts of 0.01 to 1.0 mole percent with respect to the diphenols used. Phenolic branching agents can be placed in the reaction vessel with the diphenols. Acid chloride branching agents can be introduced together with the acid chlorides.

Both homopolycarbonates and copolycarbonates are suitable. For the production of copolycarbonates according to component (i) in accordance with the invention, 1 to 25 parts by weight, preferably 2.5 to 25 parts by weight (with respect to the total amount of diphenols to be used) of polydiorganosiloxanes comprising hydroxy-aryloxy terminal groups can also be used. These are known (see, for example, USP 3,419,634) or can be produced by methods known from the literature.

Apart from bisphenol A homopolycarbonates, the preferred polycarbonates are the copolycarbonates of bisphenol A with up to 15 mole percent, with respect to the molar sums of the diphenols, of other diphenols which are cited as preferred or particularly preferred, in particular 2,2-bis(3,5-dibromo-4-hydroxyphenyl)-propane.

The preferred aromatic dicarboxylic acid dihalides for the production of the aromatic polyester carbonates are the diacid dichlorides of isophthalic acid, terephthalic acid, diphenyl ether-4,4'-dicarboxylic acid and naphthalene-2,6-dicarboxylic acid. Mixtures of the diacid dichlorides of isophthalic acid and terephthalic in a ratio between 1:20 and 20:1 are particularly preferred. A carbonic acid halide, preferably phosgene, is used in conjunction as a difunctional acid derivative during the production of the polyester carbonates.

Apart from the aforementioned monophenols, suitable chain terminators for the production of the aromatic polyester carbonates include chlorocarboxylic acid esters thereof, as well as the acid chlorides of aromatic monocarboxylic acids which may optionally be substituted by C₁ - C₂₂ alkyl groups, or by halogen atoms, and also include aliphatic C₂ - C₂₂ monocarboxylic acid chlorides. The amount of chain terminator is 0.1 to 10 mole percent in each case, with respect to the moles of diphenols in the case of phenolic chain terminators and with respect to the moles of dicarboxylic acid dichlorides in the case of monocarboxylic acid chloride chain terminators.

The aromatic polyester carbonates may also contain incorporated hydroxycarboxylic acids. The aromatic polyester carbonates may be either linear or may be branched. Suitable branching agents are disclosed hereinabove.

The proportion of carbonate structural units in the aromatic polyester carbonates can be arbitrarily varied. The content of carbonate groups is preferably up to 100 mole percent, particularly up to 80 mole percent, most preferably up to 50 mole percent, with respect to the sum of ester groups and carbonate groups. Both the ester and the carbonate fraction of the aromatic polyester carbonates can be present in the form of blocks, or can be randomly distributed in the condensation polymer.

The relative solution viscosity (ηᵣₑₗ) of the aromatic polycarbonates and aromatic polyester carbonates is within the range of 1.18 to 1.4, preferably 1.22 to 1.3 (as measured on solutions of 0.5 g of polycarbonate and polyester carbonate, respectively, in 100 mL of methylene chloride at 25°C).

The aromatic polycarbonates and aromatic polyester carbonates can be used individually or in any mixture with each other.

The thermoplastic carbonate polymer is generally used in amounts equal to or less than 100 weight percent, preferably equal to or less than 99.999 weight percent, more preferably equal to or less than 99.99 weight percent, more preferably equal to or less than 99.9 weight percent, more preferably equal to or less than 99.7 weight percent, more preferably equal to or less than 99.5 weight percent, more preferably equal to or less than 99 weight percent, more preferably equal to or less than 98 weight percent, and most preferably equal to or less than 95 weight percent based upon the total weight of the carbonate polymer composition for a specific layer (i.e., core, first, second, third, fourth, etc.). The thermoplastic carbonate polymer is generally used in amounts equal to or greater than 70 weight percent, preferably equal to or greater than 75 weight percent, more preferably equal to or greater than 80 weight percent, more preferably equal to or greater than 85 weight percent, most preferably equal to or greater than 90 weight percent based upon the total weight of the carbonate polymer composition for a specific layer (i.e., core, first, second, third, fourth, etc.).

### IR Absorbing Additive

Suitable IR absorbers to improve the heat shielding properties of the multilayered article of the present invention are, a metal boride, cesium tungsten oxide, antimony doped tin oxide particles, zinc oxide particles containing at least one element selected from In, Ga, Al, and Sb, tin doped indium oxide particles, other organic or inorganic IR absorbers such as phthalocyanine-based compositions, naphthalocyanine-based compositions, copper sulfide, or copper ion compounds which may be blended into the carbonate compositions of the present invention.

Preferably, the inorganic IR absorbing additives are generally fine particles of a metal boride, particularly a boride such as lanthanum boride (LaB₆), praseodymium boride (PrB₆), neodymium boride (NdB₆), cerium boride (CeB₆), gadolinium boride (GdB₆), terbium boride (TbB₆), dysprosium boride (DyB₆), holmium boride (HoB₆), yttrium boride (YB₆), samarium boride (SmB₆), europium boride (EuB₆), erbium boride (ErB₆), thulium boride (TmB₆), ytterbium boride (YbB₆), lutetium boride (LuB₆), strontium boride (SrB₆), calcium boride (CaB₆), titanium boride (TiB₂), zirconium boride (ZrB₂), hafnium boride (HfB₂), vanadium boride (VB₂), tantalum boride (TaB₂), a chromium borides (CrB and CrB₂), a molybdenum borides (MoB₂, Mo₂B₅ and MoB), tungsten boride (W₂B₅), or the like, or combinations comprising at least one of the foregoing borides.

It is desirable for the inorganic IR absorbing additives to be in the form of nanosized particles prior to the dispersion into the thermoplastic and/or thermosetting polymer. There is no particular limitation to the shape of the particles, which may be for example, spherical, irregular, plate-like or whisker like. The nanosized particles may generally have average largest dimensions of less than or equal to 200 nanometers (nm). In one embodiment, the particles may have average largest dimensions of less than or equal to 150 nm. In another embodiment, the particles may have average largest dimensions of less than or equal to 100 nm. In yet another embodiment, the particles may have average largest dimensions of less than or equal to 75 nm. In yet another embodiment, the particles may have average largest dimensions of less than or equal to 50 nm. As stated above, the nanosized particles may generally have average largest dimensions of less than or equal to 200 nm. In one embodiment, more than 90 percent of the particles have average largest dimensions less than or equal to 200 nm. In another embodiment, more than 95 percent of the particles have average largest dimensions less than or equal to 200 nm. In yet another embodiment, more than 99 percent of the particles have average largest dimensions less than or equal to 200 nm. Bimodal or higher particle size distributions may be used.

The inorganic IR absorbing additives are generally used in amounts of 1.2·10⁻⁶ gram/square meter (g/m²) to 2.0 g/m². In one embodiment, the inorganic IR absorbing additive may be used in amounts of 6·10⁻⁶ to 1.0 g/m². In another embodiment, the inorganic IR absorbing additive may be used in amounts of 0.09 to 0.36 g/m². In yet another embodiment, the inorganic IR absorbing additive may be used in amounts of 0.18 to 0.9 g/m².

The inorganic IR absorbing additives are generally used in amounts of equal to or less than 3000 ppm, preferably equal to or less than 2000 ppm, more preferably equal to or less than 1500 ppm, more preferably equal to or less than 1250 ppm, more preferably equal to or less than 1000 ppm, more preferably equal to or less than 750 ppm, and most preferably equal to or less than 500 ppm weight percent based on the total weight of the carbonate polymer composition for a specific layer. The inorganic IR absorbing additives are generally used in amounts of equal to or greater than 0.02 ppm, preferably equal to or greater than 1 ppm, more preferably equal to or greater than 1.5 ppm, and most preferably equal to or greater than 2.5 ppm based on the total weight of the carbonate polymer composition for a specific layer.

### UV Absorbing Additive

The composition can further comprise one or more UV absorbing additive. Suitable UV absorbing additives are cyanoacrylate compounds, triazine compounds, benzophenone compounds such as 2,4 dihydroxybenzophenone, 2-hydroxy-4-methoxybenzophenone, 2-hydroxy-4-n-octoxybenzophenone, 4-dodecyloxy-2 hydroxybenzophenone, 2-hydroxy-4-octadecyloxybenzophenone, 2,2' dihydroxy-4 methoxybenzophenone, 2,2' dihydroxy-4,4'dimethoxybenzophenone, 2,2' dihydroxy-4 methoxybenzophenone, 2,2', 4,4' tetra hydroxybenzophenone, 2-hydroxy-4-methoxy-5 sulfobenzophenone, 2-hydroxy-4-methoxy-2'-carboxybenzophenone, 2,2'dihydroxy-4,4'dimethoxy-5 sulfobenzophenone, 2-hydroxy-4-(2-hydroxy-3-methylaryloxy) propoxybenzophenone, 2-hydroxy-4 chlorobenzopheone, or the like; benzotriazole compounds such as 2-(2-hydroxy-5-tert-octylphenyl)-benzotriazole, 2-hydroxy-4-n-octoxy benzophenone 2-(2-hydroxy-5-methyl phenyl) benzotriazole, 2-(2-hydroxy-3',5'-di-tert-butyl phenyl) benzotriazole, and 2-(2-hydroxy-X-tert, butyl-5'-methylphenyl) benzotriazole, or the like; salicylate compounds such as phenyl salicylate, carboxyphenyl salicylate, p-octylphenyl salicylate, strontium salicylate, p-tert butylphenyl salicylate, methyl salicylate, dodecyl salicylate, or the like; and also other ultraviolet absorbents such as resorcinol monobenzoate, 2 ethyl hexyl-2-cyano, 3-phenylcinnamate, 2-ethyl-hexyl-2-cyano-3,3-diphenyl acrylate, ethyl-2-cyano-3,3-diphenyl acrylate, 2-2'-thiobis(4-t-octylphenolate)-1-n-butylanune, or the like, or combinations comprising at least one of the foregoing UV absorbing additives. Preferred commercially available UV absorbing additives are TINUVIN^{™} 234, TINUVIN 329, TINUVIN 350 and TINUVIN 360, commercially available from Ciba Specialty Chemicals; CYASORB^{™} UV absorbing additives, available from Cytec Industries, such as 2-(2H-benzotriazol-2-yl)-4-(1,1,3,3-tetramethylbutyl)-phenol (CYASORB 5411); 2-hydroxy-4-n-octyloxybenzophenone (CYASORB 531); 2-[4,6-bis(2,4-dimethylphenyl)-1,3,5-triazin-2-yl]-5-(octyloxy)-phenol (CYASORB 1164); 2,2'-(1,4-phenylene)bis(4H-3,1-benzoxazin-4-one) (CYASORB UV-3638); 1,3-bis[(2-cyano-3,3-diphenylacryloyl)oxy]-2,2-bis[[(2-cyano-3,3-diphenyl-acryloyl)oxy]methyl]propane (UVINUL^{™} 3030); 2,2'-(1,4-phenylene) bis(4H-3,1-benzoxazin-4-one); 1,3-bis[(2-cyano-3,3-diphenylacryloyl)oxy]-2,2-bis[[(2-cyano-3,3-diphenyl- acryloyl)oxy]methyl]propane; 2,2'-methylen-bis-(6-{2H-benzotriazol-2-yl}-4-{1,1,3,3-tetramethylbutyl}-phenol) (LA-31 from Adeka Argus); or 2-(4,6-diphenyl-1,3,5-triazin-2-yl)-5-hexyloxyphenol (TINUVIN 1577 from Ciba Geigy). For articles formed by extrusion, UVINUL 3030, commercially available from BASF, is specifically useful due to its low volatility.

Preferably in the carbonate polymer compositions used in independent layers of the present invention, for example, but not limited to the core, second, third or fifth layers, there is an emphasis on the use of higher molecular weight and lower volatility UV absorbing additives, especially if used in higher concentrations in co-extruded layers. In one embodiment, the present invention relates to a carbonate polymer composition comprising one or more UV absorbing compounds having a molecular weight equal to or greater than 400 g/mol.

The one or more UV absorbing additive can be used in the carbonate polymer composition independently in amounts of equal to or less than 15 weight percent, preferably equal to or less than 10 weight percent, more preferably equal to or less than 7.5 weight percent, and most preferably equal to or less than 5 weight percent based on the total weight of the carbonate polymer composition for a specific layer. The one or more UV absorbing additive can be used in the carbonate polymer composition independently in amounts of equal to or greater than 0.01 weight percent, preferably equal to or greater than 0.1 weight percent, more preferably equal to or greater than 0.5 weight percent, more preferably equal to or greater than 1 and most preferably equal to or greater than 2 weight percent based on the total weight of the carbonate polymer composition for a specific layer.

### Thermal Stabilizer

The composition can contain one or more thermal stabilizers to compensate for the increase in temperature brought on by the interaction of the IR light with the inorganic infrared shielding additives. Further, the addition of thermal stabilizers protects the material during processing operations such as melt blending. In general, an article comprising thermoplastic polymer containing the inorganic infrared shielding additives may experience an increase in temperature of up to 20°C, upon exposure to light. The addition of thermal stabilizers to the composition improves the long term aging characteristics and increases the life cycle of the article.

In another embodiment thermal stabilizers may be optionally added to the composition to prevent degradation of the organic polymer during processing and to improve heat stability of the article. Suitable thermal stabilizers include phosphites, phosphonites, phosphines, hindered amines, hydroxylamines, phenols, acryloyl modified phenols, hydroperoxide decomposers, benzofuranone derivatives, or the like, or combinations comprising at least one of the foregoing thermal stabilizers. Examples include, but are not limited to, phosphites such as tris(nonyl phenyl) phosphite, tris(2,4-di-t-butylphenyl) phosphite, bis(2,4-di-t-butylphenyl) pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)]methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; tetrakis(2,4-di-tert-butylphenyl) 4,4'-biphenylenediphosphonite (IRGAPHOS^{™} PEPQ); amides of beta-(3,5-di-tert-butyl-4-hydroxyphenyl)-propionic acid or the like, or combinations comprising at least one of the foregoing antioxidants. Suitable thermal stabilizers that are commercially available are IRGAPHOS 168, DOVERPHOS^{™} S-9228, ULTRANOX^{™} 641, or the like. If desirable, an optional co-stabilizer such as a aliphatic epoxy or a hindered phenol anti-oxidant such as IRGANOX^{™} 1076, IRGANOX 1010, both from Ciba Specialty chemicals may also be added to improve thermal stability of the composition. The preferred thermal stabilizers are phosphites.

The one or more thermal stabilizers can be used in the carbonate polymer composition independently in amounts of equal to or less than 5 weight percent, preferably equal to or less than 3 weight percent, more preferably equal to or less than 1 weight percent, more preferably equal to or less than 1 weight percent, more preferably equal to or less than 0.5 weight percent, and most preferably equal to or less than 0.1 weight percent based on the total weight of the carbonate polymer composition for a specific layer. The one or more thermal stabilizers can be used in the carbonate polymer composition independently in amounts of equal to or greater than 0.001 weight percent, preferably equal to or greater than 0.002 weight percent, more preferably equal to or greater than 0.005 weight percent, and most preferably equal to or greater than 0.01 weight percent based on the total weight of the carbonate polymer composition for a specific layer.

### Antioxidant

As the antioxidant preferably used in the present invention, there are exemplified hindered phenol-based antioxidants. Specific examples of the hindered phenol-based antioxidants may include pentaerythirtyl-tetrakis[3-(3,5-di-t-butyl-4-hydroxyphenyl)propionate], octadecyl-3-(3,5-di-t-butyl-4-hydroxyphenyl)propionate, thio-diethylenebis[3-(3,5-di-t-butyl-4-hydroxphenyl)propionate], N,N'-hexane-1,6-di-yl-bis[3-(3,5-di-t-butyl-4-hydroxphenylpropionamide), 2,4-dimethyl-6-(1-methylpentadecyl)phenol, diethyl[[3,5-bis(1,1-dimethylethyl)-4-hydroxyphenyl]methyl] phosphate, 3, 3', 3", 5,5', 5"-hexa-t-butyl-a,a',a"-(mesitylene-2,4,6-tri-yl) tri-p-cresol, 4,6-bis(octylthiomethyl)-o-cresol, ethylene-bis(ox-yethylene)bis[3-(5-t-butyl-4-hydroxy-m-tolyl)propionate], hexamethylene-bis[3-(3,5-di-t-butyl-4-hydroxyphenyl)propionate], 1,3,5-tris(3,5-di-t-butyl-4-dyroxybenzyl)-1,3,5-trazine-2,4,6(1H,3H,5H)-tri-one,2,6-di-t-butyl-4-(4,6-bis(octylthio)-1,3,5-triazine-2-yl-amino)phenol, or the like. Of these, pentaerythrityl-tetrakis[3-(3,5-di-t-butyl-4-hydroxyphenyl)propionate] and octadecyl-3-(3,5-di-t-butyl-4-hydroxyphenyl)propionate are especially preferred. These two phenol-based antioxidants are available as trade names of "IRGANOX 1010" and "IRGANOX 1076" respectively produced by Ciba Speciality Chemicals Corp.

One or more antioxidant can be used in the carbonate polymer compositions used in the present invention. The amount of phenol-based antioxidant can be used in the carbonate polymer composition in amounts of equal to or less than 2 weight percent, preferably equal to or less than 1 weight percent, more preferably equal to or less than 1 weight percent, more preferably equal to or less than 0.5 weight percent, more preferably equal to or less than 0.4 weight percent, and most preferably equal to or less than 0.2 weight percent based on the total weight of the carbonate polymer composition for a specific layer. The amount of phenol-based antioxidant can be used in the carbonate polymer composition in amounts of equal to or greater than 0.01 weight percent, preferably equal to or greater than 0.05 weight percent, and most preferably equal to or greater than 0.1 weight percent based on the total weight of the carbonate polymer composition for a specific layer. When the content of the phenol-based antioxidant is less than 0.1 weight percent, the effect of antioxidant may be insufficient and when the content of the phenol-based antioxidant is more than 2 weight percent, the effect of antioxidant may be saturated.

### Antistatic

The term "antistatic agent" refers to monomeric, oligomeric, or polymeric materials that can be processed into polymer resins and/or sprayed onto materials or articles to improve conductive properties and overall physical performance. Examples of monomeric antistatic agents include glycerol monostearate, glycerol distearate, glycerol tristearate, ethoxylated amines, primary, secondary and tertiary amines, ethoxylated alcohols, alkyl sulfates, alkylarylsulfates, alkylphosphates, alkylaminesulfates, alkyl sulfonate salts such as sodium stearyl sulfonate, sodium dodecylbenzenesulfonate or the like, quaternary ammonium salts, quaternary ammonium resins, imidazoline derivatives, sorbitan esters, ethanolamides, betaines, or the like, or combinations comprising at least one of the foregoing monomeric antistatic agents.

Exemplary polymeric antistatic agents include certain polyesteramides polyether-polyamide (polyetheramide) block copolymers, polyetheresteramide block copolymers, polyetheresters, or polyurethanes, each containing polyalkylene glycol moieties polyalkylene oxide units such as polyethylene glycol, polypropylene glycol, polytetramethylene glycol, and the like. Such polymeric antistatic agents are commercially available, for example PELESTAT^{™} 6321 (Sanyo) or PEBAX^{™} MH1657 (Atofina), IRGASTAT^{™} P18 and P22 (Ciba-Geigy). Other polymeric materials that may be used as antistatic agents are inherently conducting polymers such as polyaniline (commercially available as PANIPOL^{™} EB from Panipol), polypyrrole and polythiophene (commercially available from Bayer), which retain some of their intrinsic conductivity after melt processing at elevated temperatures. In one embodiment, carbon fibers, carbon nanofibers, carbon nanotubes, carbon black, or any combination of the foregoing may be used in a polymeric resin containing chemical antistatic agents to render the composition electrostatically dissipative.

Antistatic agents that are suitable for use herein include onium salts of alkyl sulfonates, particularly alkylated and arylated onium salts of perfluorinated alkyl sulfonates. Exemplary onium salts are phosphonium, ammonium, sulfonium, imidazolinium, pyridinium or tropilium salt. Preferable are alkylated ammonium and phosphonium salts of perfluorinated alkyl sulfonates. Most preferable alkylated phosphonium sulfonates. Specifically useful phosphonium sulfonates include fluorinated phosphonium sulfonates which can comprise a fluorocarbon containing an organic sulfonate anion, and an organic phosphonium cation. Suitable examples of such organic sulfonate anions include, but are not limited to, perfluoro methane sulfonate, perfluoro butane sulfonate, perfluoro hexane sulfonate, perfluoro heptane sulfonate, perfluoro octane sulfonate, combinations comprising one or more of these, and the like. Suitable examples of the aforementioned phosphonium cation include, but are not limited to, aliphatic phosphonium such as tetramethyl phosphonium, tetraethyl phosphonium, tetrabutyl phosphonium, triethylmethyl phosphonium, tributylmethyl phosphonium, tributylethyl phosphonium, trioctylmethyl phosphonium, trimethylbutyl phosphonium trimethyloctyl phosphonium, trimethyllauryl phosphonium, trimethylstearyl phosphonium, triethyloctyl phosphonium and aromatic phosphoniums such as tetraphenyl phosphonium, triphenylmethyl phosphonium, triphenylbenzyl phosphonium, tributylbenzyl phosphonium, combinations comprising one or more of the foregoing, and the like. Suitable examples of the aforementioned ammonium cation include, but are not limited to, aliphatic ammonium such as tetramethyl ammonium, tetraethyl ammonium, tetrabutyl ammonium, triethylmethyl ammonium, tributylmethyl ammonium, tributylethyl ammonium, trioctylmethyl ammonium, trimethylbutyl ammonium trimethyloctyl ammonium, trimethyllauryl ammonium, trimethylstearyl ammonium, triethyloctyl ammonium and aromatic ammoniums such as tetraphenyl ammonium, triphenylmethyl ammonium, triphenylbenzyl ammonium, tributylbenzyl ammonium, combinations comprising one or more of the foregoing, and the like. A combination comprising at least one of the foregoing antistatic agents may also be used.

One or more antistatic agents can be used independently in amounts of 0.0001 to 5.0 weight percent, based on the total weight of the carbonate polymer composition for a specific layer.

### Mold Release

Examples of preferred mold release agents used in the present invention may include at least one selected from aliphatic carboxylic acids, esters of aliphatic carboxylic acid and aliphatic alcohol, aliphatic hydrocarbon compounds having a number-average molecular weight of 200 to 15000 and polysiloxane-based silicone oils.

Examples of the above aliphatic carboxylic acids may include saturated or unsaturated aliphatic monocarboxylic acids, dicarboxylic acids and tricarboxylic acids. Here, the aliphatic carboxylic acids also involve alicyclic carboxylic acids. Of these aliphatic carboxylic acids, preferred are C₆ to C₃₆ mono- or di-carboxylic acids, and more preferred are C₆ to C₃₆ aliphatic saturated monocarboxylic acids. Specific examples of such aliphatic carboxylic acids may include palmitic acid, stearic acid, caproic acid, capric acid, lauric acid, arachic acid, behenic acid, lignoceric acid, cerotic acid, melissic acid, tetraiacontanioc acid, montanic acid, adipic acid and azelic acid.

As the aliphatic carboxylic acid components constituting the ester of aliphatic carboxylic acid and aliphatic alcohol, there may be used the same aliphatic carboxylic acids as described above. Also, as the aliphatic alcohol components constituting the aliphatic carboxylic acid esters, there may be used saturated or unsaturated monohydric alcohols, saturated or unsaturated polyhydric alcohols, etc. These alcohols may have substitute groups such as a fluorine atom, an aryl group or the like. Of these alcohols, preferred are saturated monohydric or polyhydric alcohols having not more than 30 carbon atoms, and more preferred are polyhydric alcohols or aliphatic saturated monohydric alcohols having not more than 30 carbon atoms. Here, the aliphatic alcohols also involve alicyclic alcohols. Specific examples of the alcohols may include octanol, decanol, dodecanol, stearyl alcohol, behenyl alcohol, ethylene glycol, diethylene glycol, glycerol, pentaerythritol, 2,2-dihydroxyperfluoropropanol, neopentylene glycol, ditrimethylol propane and dipentaerythritol. These ester of aliphatic carboxylic acid and aliphatic alcohol may contain aliphatic carboxylic acids and/or alcohols as impurities, or may be in the form of a mixture of a plurality of compounds.

Specific examples of the ester of aliphatic carboxylic acid and aliphatic alcohol may include bees wax (mixtures containing myricyl palmitate as a main component), stearyl stearate, behenyl behenate, stearyl behenate, glycerol monopalmitate, glycerol monostearate, glycerol distearate, glycerol tristearate, penaerythritol monopalmitate, pentaerythritol monostearate, pentaerythritol distearate, pentaerythritol tristearate and pentaerythritol tetrastearate or the like.

As the aliphatic hydrocarbon compounds having a number-average molecular weight of 200 to 15000, there are exemplified liquid paraffins, paraffin waxes, microwaxes, polyethylene waxes, Fischer-Tropsch waxes, α-olefin oligomers having C₆ to C₁₂ or the like. Here, the aliphatic hydrocarbon compounds also involve alicyclic hydrocarbon compounds also involve alicyclic hydrocarbon compounds. Further, these hydrocarbon compounds may be partially oxidized. Of these, paraffin waxes, polyethylene waxes and partially oxidized products of polyethylene wax are preferred, and paraffin waxes and polyethylene waxes are more preferred. The number-average molecular weight of aliphatic hydrocarbon compounds is preferably 200 to 5000. These aliphatic hydrocarbon compounds may be used singly or as a mixture of two or more compounds having various components and molecular weights as long as the main constitution has the properties within the above range.

As the polysiloxane-based silicone oils, there are exemplified dimethyl silicone oils, phenylmethyl silicone oils, diphenyl silicone oils, fluorinated alkyl silicone oils or the like. These may be used singly or as a mixture of two or more.

The amount of mold release agent can be used in the composition in amounts of equal to or less than 2 weight percent, preferably equal to or less than 1 weight percent, more preferably equal to or less than 1 weight percent, more preferably equal to or less than 0.5 weight percent, more preferably equal to or less than 0.4 weight percent, and most preferably equal to or less than 0.2 weight percent based on the total weight of the carbonate polymer composition for a specific layer. The amount of mold release agent can be used in the composition in amounts of equal to or greater than 0.01 weight percent, preferably equal to or greater than 0.05 weight percent, and most preferably equal to or greater than 0.1 weight percent based on the total weight of the carbonate polymer composition for a specific layer. These mold release agents may be used singly or as a mixture of two or more.

### Dyes

Polycarbonate compositions in optical uses typically are color-corrected, i.e. they contain dyes to adjust the color in order to compensate for the any slightly color shade of the polycarbonate, typically yellow.

Dyes which can be employed for adjustment of the color in polycarbonate are in principle all dyes which have a sufficiently high heat stability up to at least 300°C, so that they are not decomposed at the processing temperatures of the polycarbonate. Furthermore, the dyes should not have basic functionalities, which lead to a degradation of the polymer chain of the polycarbonate.

Suitable dyes include dyes of the following classes: anthanthrones, anthraquinones, benzimidazoles, diketopyrrolopyrroles, isoindolinols, perinones, perylenes, phthalocyanines, quinacridones and quinophthalones.

Preferably, dyes for use in the present invention are organic materials and include, for example, coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly(C₂₋₈) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores such as anti-stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3"",5""-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethylirninophenoxazonium perchlorate; 2-(1-naphthyl)-5-phenyloxazole; 2,2'-p-phenylen-bis(5-phenyloxazole); rhodamine 700; rhodamine 800; pyrene; chrysene; rubrene; coronene, or the like, or combinations comprising at least one of the foregoing dyes.

MACROLEX^{™} dyes from Lanxess can be very suitably employed for coloring polycarbonate. A large number of various dyes are available from this product line, e.g. the methine dyes MACROLEX Yellow 6G Gran, the azo dyes MACROLEX Yellow 4G, the pyrazolone dyes MACROLEX Yellow 3G Gran, the quinophthalone dyes MACROLEX Yellow G Gran, the perinone dyes MACROLEX Orange 3G Gran, the methine dyes MACROLEX Orange R Gran, the perinone dyes MACROLEX Red E2G Gran and MACROLEX Red EG Gran and the anthraquinone dyes MACROLEX Red G Gran, MACROLEX Red 5B Gran, MACROLEX Red Violet R Gran, MACROLEX Violet B Gran, MACROLEX Blue 3R Gran, MACROLEX Blue 2B Gran, MACROLEX Green 5B Gran and MACROLEX Green G Gran.

WO 99/13007 moreover describes e.g. indigo derivatives which are suitable for dyeing polycarbonate.

DE 19747395 describes e.g. benzo(de)isoquinolinobenzo(1,2-d:4,5-d')diimidazole-2,12-diones which can be employed as polymer-soluble dyess, inter alia in polycarbonate.

Preferable dyes are violet and/or blue in color or produce violet and/or blue color in the carbonate polymer compositions of the invention, for example Macrolex Violet 3R Gran (which is a violet dye and sometimes called Solvent Violet 36) and 1,4-bis[(2,6-diethyl-4-methylphenyl)amino]- 9,10-anthracenedione, available as Macrolex Blue RR Gran (which is a blue dye and is sometimes called Solvent Blue 97) which are anthraquinone dyes. Such violet and blue dyes are preferably used in combination in a ratio of from 25:75 to 75:25.

One or more dye can be used independently or in combination wherein each dye is independently present in an amount equal to or greater than 1 ppm, preferably equal to or greater than 10 ppm, more preferably equal to or greater than 25 ppm, and most preferably equal to or greater than 50 ppm based on the total weight of the carbonate polymer composition for a specific layer. One or more dye can be used independently or in combination wherein each dye is independently present in an amount equal to or less than 10,000 ppm, preferably equal to or less than 5,000 ppm, more preferably equal to or less than 1,000 ppm, more preferably equal to or less than 750 ppm, and most preferably equal to or less than 500 ppm based on the total weight of the carbonate polymer composition for a specific layer.

### Other Additives

Other additives typically used in transparent polycarbonate compositions can also be employed. For example, flame retardants, optical brighteners, anti-blocking agents, lubricants, anti-fog agents, natural oils, synthetic oils, waxes, or the like. For example, flame retardant additives that leave the composition transparent can be used in one or more layer composition. Preferred flame retardant additives are silicone based flame retardants, phosphorous based flame retardants, brominated flame retardants such as brominated bis-A oligomers (e.g., BC-52 available from CHEMTURA) at levels up to 20 weight percent, C4 charring salts (potassium perfluorobutane sulphonate, available form Lanxess) up to 1500 ppm, KSS (diphenyl sulfone-3-sulfonic acid, potassium salt, available from Seal Sands) up to 1.0 weight percent, alone or in combinations. Another additive preferably employed in any layer composition, but preferably a layer composition comprising a UV stabilizer, and more preferably the outermost UV cap layer composition is an optical brightener. For example, 2,2'-(2,5-Thiophenediyl)bis[5-tert-butylbenzoxazole] available as UVITEX^{™} OB from CIBA, 2,2'-(1,2-ethenediyldi-4,1-phenylene) bisbenzoxazole available as EASTOBRITE^{™} OB-1 from EASTMAN, 2-[4-[4-(2-Benzoxazolyl)styryl]phenyl]-5-methylbenzoxazole, available as HOSTALUX KS-N from CLARIANT. Optical brighteners are typically employed in amounts from 1 to 10000 ppm, more preferably from 2 to 1000 ppm, and most preferably from 5 to 500 ppm.

### Production of Carbonate Compositions for Multilayers

The process for producing the transparent carbonate polymer layer compositions (i.e., the core layer carbonate polymer composition, the first layer carbonate polymer composition, the second layer carbonate polymer composition, the third layer carbonate polymer composition, the fourth layer carbonate polymer composition, the fifth layer carbonate polymer composition, and/or additional carbonate polymer compositions) for use in the transparent multilayered article of the present invention is not particularly limited. The process for producing each of the carbonate polymer layer compositions is independent of one another, in other words each layer composition may be made the same way, each may be made a different way, or some may be made the same way while others made a different way. Further, the process for producing the carbonate polymer compositions for each layer may be independent of the process to convert the layer compositions into a multilayer article or it may be a single process wherein the compositions are made and fabricated into a multilayer article.

For example, for each layer composition independently the one or more additives (i.e., IR absorbing additive, UV absorbing additive, mold release, antioxidant, thermal stabilizer, dye, other additives, etc.) may be mixed in the polymerization stage of the carbonate polymer or at the end of the polymerization of the carbonate polymer, or the additives may be mixed in a kneading step under melting conditions of the carbonate polymer, or the additives may be mixed (with a mixer or other means) which is sometimes referred to as dry blended (in either solid or liquid form depending on the particular additive) with the solid state carbonate polymer (usually in the form of powder, pellets, or flake), the mixture melted, and kneaded by use of an extruder (single and twin screw), Buss-kneaders, helicones, WARING BLENDER^{™}, HENSCHEL^{™} mixer, BANBURY^{™} mixer, roll mill, or the like and either converted directly into an article, e.g., a (multilayer)extruded sheet, a (multilayer)extruded structural sheet, or comminuted to pellets and subsequently converted into an article, e.g., a (multilayer)extruded sheet.

Alternatively, the additives for each carbonate polymer layer composition may be compounded into a masterbatch. A masterbatch can be prepared for use with a carbonate base polymer to prepare one or more carbonate polymer layer composition. As used herein, the term "masterbatch" refers to a dispersion of particles in a carrier resin, and typically is in the form of a pellet or bead formed using a mixing process such as a compounding/extrusion process. Preparing the masterbatch comprises melt combining a mixture or dry blend comprising a carrier resin and one or more desired additional components such as, for example, the IR absorbing additive, the UV absorbing additive, antioxidant, mold release, dyes, thermal stabilizer and the like. In one embodiment, the carrier resin is a polycarbonate resin. The masterbatch can be melt combined with a carbonate base polymer and other additives to form the carbonate polymer layer composition. In one embodiment, the base polymer is a polycarbonate resin. In another embodiment, the base polymer is the same as the carrier resin used to prepare the masterbatch. The masterbatch can be combined with the base polymer as described hereinabove using a mixer, and extruded. In one embodiment, the masterbatch and base polymer are combined in the hopper at the feedthroat of an extruder. In another embodiment, the base polymer is added to the hopper at the feedthroat of the extruder, and the masterbatch is added to a downstream feedport of the extruder.

A preferred process for producing each carbonate polymer layer composition is to independently make a mixture or dry blend of the carbonate polymer and the desired additives for each carbonate polymer layer composition using carbonate polymer pellets and the solid/liquid state form of the additive(s) then co-extruding the multiple layer compositions into a multilayer article, such as a multilayer sheet. These mixtures or dry blends may be made and isolated as a physical melt blended mixture of pellets/additives prior to co-extrusion or the mixture may be made *in situ* and not isolated, for example by metering the components into a feed hopper at the throat of an extruder (via a dosing machine or feeder) and, without isolating the mixture, co-extruding the mixture directly into a multilayer article.

The articles manufactured from the multiple carbonate polymer layer compositions can multilayered films, multilayered sheets, multilayered film/sheet combination, multilayered plaques, or other multilayered molded articles. The sheet can be solid or structural. A film is a layer having a thickness of 0.1 to 1000 micrometers, while in general a sheet, plaque, or other molded article has a thickness of greater than 1000 micrometers to 60 millimeters (mm).

In a specific embodiment, a solid sheet/film multilayered article can have a thickness of 0.05 to 20 millimeters (mm), specifically 0.1 to 15 mm, more specifically 0.5 to 12 mm, and still more specifically 1 to 10 mm.

In a specific embodiment, a structural sheet/film multilayered article can have a thickness of 4 to 60 millimeters (mm), specifically 6 to 50 mm, and more specifically 8 to 40 mm.

Multilayered films, multilayered sheets, or a combination of one or more film with one or more sheet may generally be produced by extrusion followed by laminating the films or sheets in a roll mill or a roll stack (this if for solid film/sheet; for structural sheet, extrusion is followed by calibration through opposite pairs of calibration plates). The extrusion for the identified layers of the multilayered film or multilayered sheet may be performed in a single screw extruder or in a twin screw extruder. It is desirable to extrude the layers in a single or twin screw extruder and to laminate the layers in a roll mill. It is more desirable to co-extrude the layers in a single screw extruder or twin screw extruder. Co-extrusion equipment can simultaneously co-extrude multilayered articles having 2, 3, 4, 5,6, or more layers. Alternatively, a multilayered article having two or more layers may be co-extruded and one or more layer further laminated to said multilayered article, for example in a roll mill. The roll mill may be either a two roll, three roll mill, or four roll mill, as is desired. The opposite pairs of calibration plates can consist out of a single pair, a double pair or a triple pair. Where desired, the layers can be co-extruded using single screw extruders for manufacturing of the multilayered film or sheet.

In a preferred method to produced the multilayered article of the present invention, the layers of the multilayered articles are co-extruded (i.e., prepared by multilayer coextrusion). In one embodiment, in one manner of co-extruding of the multilayered sheet, the melt streams (extrudates) from the various extruders are fed into a feed block die where the various melt streams are combined before entering the die. In another embodiment, the melt streams from the various extruders are fed into a multi-manifold internal combining die. The different melt streams enter the die separately and join just inside the final die orifice. In yet another embodiment, the melt streams from the various extruders are fed into a multi-manifold external combining die. The external combining dies have completely separate manifolds for the different melt streams as well as distinct orifices through which the streams leave the die separately, joining just beyond the die exit. The layers are combined while still molten and just downstream of the die. An exemplary die used in the production of the multilayered sheet is a feed block die. In an exemplary embodiment, the extruders used for the co-extrusion of the respective layers of the multilayer sheet are single screw extruders respectively. The co-extruded sheet may optionally be calendared in a roll mill if desired.

Film layers used in the multilayered article of the present invention may independently have a thickness equal to or less than 1000 micrometers, preferably equal to or less than 750 micrometers, more preferably equal to or less than 500 micrometers, more preferably equal to or less than 250 micrometers, more preferably equal to or less than 200 micrometers, more preferably equal to or less than 150 micrometers, more preferably equal to or less than 100 micrometers, more preferably equal to or less than 90 micrometers, more preferably equal to or less than 80 micrometers, and most preferably equal to or less than 70 micrometers. Film layers used in the multilayered article of the present invention may independently have a thickness equal to or greater than 0.1 micrometers, preferably equal to or greater than about 1 micrometers, more preferably equal to or greater than 10 micrometers, more preferably equal to or greater than 20 micrometers, more preferably equal to or greater than 30 micrometers, more preferably equal to or greater than 40 micrometers, and most preferably equal to or greater than 50 micrometers.

Sheet layers used in the multilayered article of the present invention may independently have a thickness equal to or less than 40 mm, preferably equal to or less than 30 mm, more preferably equal to or less than 20 mm, more preferably equal to or less than 15 mm, more preferably equal to or less than 12 mm, and most preferably equal to or less than 10 mm. Sheet layers used in the multilayered article of the present invention may independently have a thickness equal to or greater than 1 mm, preferably equal to or greater than 2 mm, more preferably equal to or greater than 3 mm, more preferably equal to or greater than 4 mm, and most preferably equal to or greater than 5 mm.

### IR Performance

The multilayered article manufactured of the present invention desirably absorbs an amount of IR radiation. In one embodiment, IR radiation is radiation in the near infrared (NIR) spectral region having a wavelength of 780 to 2000 nanometers (nm). In another embodiment, IR radiation is radiation in the near infrared (NIR) spectral region having a wavelength of 780 to 1400 nanometers (nm). The article may absorb an amount of greater than or equal to 5 percent, specifically greater than or equal to 20 percent, more specifically greater than or equal to 30 percent, still more specifically greater than or equal to 40 percent, still more specifically greater than or equal to 50 percent, still more specifically greater than or equal to 60 percent and still more specifically greater than or equal to 99.99 percent of the IR radiation incident upon the surface of the multilayered article.

### Transparency Performance

While it is desirable for the multilayered article to absorb as much electromagnetic radiation as possible in the IR region of the electromagnetic spectrum, it is also desirable for the multilayered article to be transparent in the visible region of the electromagnetic spectrum. The visible region of the electromagnetic spectrum generally has wavelengths of about 400 to about 700 nm. Thus, the multilayered article can have a percent transmission of light in the visible region of greater than or equal to 60 percent, specifically greater than or equal to 70 percent, more specifically greater than or equal to 80 percent, still more specifically greater than or equal to 85 percent, and still more specifically greater than or equal to 90 percent as measured using 2.5 mm thickness according to ASTM D1003-00.

### Haze Performance

While it is desirable for the multilayered article to absorb as much electromagnetic radiation as possible in the IR region of the electromagnetic spectrum and be transparent in the visible region of the electromagnetic spectrum, it is also desirable for the multilayered article to have reduced haze. Thus, the multilayered article can have a haze of less than or equal to 20 percent, specifically less than or equal to 15 percent, more specifically less than or equal to 10 percent, still more specifically less than or equal to 5 percent, and still more specifically less than or equal to 2 percent as measured using 2.5 mm thickness according to ASTM D1003-00.

### Color

Color is measured on the sheet structures as described in the examples using a DATACOLOR COLORIMETER in transmission mode. Values determined are the Yellowness Index YI D1925 according to ASTM E313 as well as the CIE Lab L*, a* and b* values according to ASTM E308. For each value, at least five measurements on different plaques are made and an average is calculated.

### EXAMPLES

Examples A to H are the carbonate polymer compositions used to produce the layers of the multilayered sheet described herein under and are not examples of the invention. The carbonate polymer compositions are prepared by dry blending the polycarbonate in the form of pellets with the additives listed in Table 1, tumble mixing for at least 30 minutes in a polyethylene container, and extruding using a Werner Pfleiderer 25mm twin-screw extruder model ZSK-25, wherein the extrudate is cooled through a water bath and comminuted to pellets. The compounding conditions are as follows: Barrel temperature profile, °C: 240, 250, 260, 270, 280, 290, 300; Nozzle temperature, °C: 300; Screw rotation per minute (RPM): 250; Throughput: 10 kilogram per hour (kg/hr); and Water bath temperature, °C: 20. Prior to compounding, the polycarbonate pellets are dried at 120C for at least four hours. In preparation of each dry blend, 400 part per million (ppm) of LOXIOL^{™} 3820 available from Cognis (a liquid sticking agent) is sprayed over the pellets and tumbled blended for at least 15 minutes prior to adding the powder additives which is then tumble blended for a minimum of at least 15 more minutes.

Examples 1 to 4 (examples of the present invention) and Examples I to M (comparative examples, not examples of the present invention) are coextruded multilayered polycarbonate sheet comprising a polycarbonate core first layer, a cap third layer of a polycarbonate comprising an UV stabilizer and an optional second layer disposed between the core layer and UV cap layer comprising compositions of Examples A to H, alone or in mixtures, to provide di- or tri-layered sheets. The compositions and thicknesses of each layer for Examples 1 to 4 and Examples I to M, are described in Table 2.

The three layered multilayered sheets of the examples are prepared using a Reifenhauser extruder with a 70mm two stage devolatilizing screw with an L/D of 30. The extruder is equipped with a Maag gear pump in combination with two Scamia co-extruders one with a 45mm screw having an L/D of 26 and one with a 40mm screw having an L/D of 26. Three layered extrusion is applied by means of a Dow cassette feed block system, feeding into a 900mm wide Erwepa die with a coat hanger manifold. The extruder is equipped with a down stack polish gloss 3 roll stack having two roll diameters of 300 and one of 1200mm. The main extruder is used to extrude the core layer, the Scamia 35mm extruder is used to extrude the UV cap layer (e.g., the second layer) comprising the UV absorber, and the Scamia 45mm extruder is used to extrude the IR cap layer (e.g., the first layer) comprising an IR absorber. The following equipment settings are used: Barrel temperature for the main extruder ranges from 280°C in zone 1 to 250°C in zone 6, Gear pump temperature is 250°C, Feed block temperature is 250°C, Die temperature is between 250°C to 255°C, Barrel temperature in the two co-extruders range from 280°C in zone 1 to 250°C in zone 6, Main extruder pump speed is 70 rotations per minute (RPM), Screw speed for the Scamia 35mm is 15 RPM, and Screw speed for the Scamia 45 is 24 RPM. The roll stack temperature from top to bottom roll is 114°C, 115°C, and 123°C. The roll gaps are 2 and 2.1mm.

The following are used in the compositions of Examples 1 to 4 and Examples A to M as described in Tables 1 and 2 below, components are listed in parts by weight (pbw) based on the total weight of the composition:
"PC-1" is a polycarbonate homopolymer composition comprising about 6 parts by weight of 1,3-bis[(2-cyano-3,3-diphenylacryloyl)oxy]-2,2-bis[[(2-cyano-3,3-diphenyl-acryloyl)oxy]methyl]propane, a UV stabilizer available as UVINUL 3030 from BASF, and about 400 ppm of a 50:50 mixture of a violet and blue dyes having a melt flow rate (MFR) of about 8 gram per 10 minutes (g/10 min);
"PC-2" is a natural polycarbonate homopolymer having a MFR of about 6 g/10 min;
"LaB₆" is lanthanum boride available as a 0.25 weight percent masterbatch in polycarbonate in pellet form under the tradename KHCS-06 from Sumitomo Metal Mining Co., Ltd., amounts listed in Table 1 are in part per million (ppm) LaB₆ based on the total weight of the carbonate polymer composition;
"Dye" is a mixture of Macrolex Violet 3R and Macrolex Blue RR both are anthraquinone dyes available from Lanxess;

The following properties are determined on the multilayered sheet samples:
"YI" is Yellowness Index determined according to ASTM D1925 is unitless and is reported for the examples before weathering, after weathering and as the change in YI (ΔYI) from before to after weathering;
"Light Transmission", is determined according to ASTM D1003-00 is reported as %T (percent total visible light transmission) for the examples before weathering, after weathering and as the change in Light Transmission (ΔT) from before weathering to after weathering;
"Haze" is determined according to ASTM D1003-00 is reported as %Haze (percent diffuse visible light transmission/total visible light transmission) for the examples before weathering, after weathering and as the change in in Haze (ΔHaze) from before weathering to after weathering;
"CIE Lab" color analysis is preformed on a Data Color Colorimeter;
"UV Stability" is determined on multilayered sheet samples weathered according to ASTM G53-88 (outdoor conditions) using a QUV-B lamp for 700 hours, the procedure consists of a repeated cycle of UV exposure for four hours at 60°C black panel temperature then followed by four hours condensation at 50°C black panel temperature and CIE Lab L*, a*, and b* values are recorded prior to, during, and after weathering;
"IR Stability" solar heat reduction is determined on unweathered 8cm by 8cm multilayered sheet samples which are centered on the top of an open ended test chamber and illuminated by a clear 250 watt infrared heat lamp (IR 250S (250 W ir2) available from Philips with an Eider ES3 220 V- 250 watt lamp fitting) 25cm above the sample. Samples with a layer comprising an IR absorber are placed with the IR absorber layer on the outside of the chamber such that the IR absorbing layer is between the lamp and the core layer of the multilayered sheet. The test chamber measures 25cm width by 25cm length by 40cm in height having double insulated walls with three inches of STYROFOAM^{™} brand insulation between the inner and outer wall. The inner wall of the test chamber is painted matt black. A thermocouple is placed inside the test chamber 5cm from the bottom side of the test sample, in other words, the surface of the multilayered sheet inside the chamber and opposite the illumination source. The test chamber is in a controlled atmosphere of 25°C and 50 percent relative humidity. As soon as the lam is turned on, the temperature inside the box begins to rise and reaches equilibrium after 5 to 6 hours. The temperature inside the box is measured after 8 hours and is reported as the change in temperature, (ΔT), versus Comparative Example I which is a multilayered sheet with a core of polycarbonate base (Example A) resin and a cap layer of polycarbonate comprising a UV stabilizer (Example B).

**Table 1**

| Example | PC-1 | PC-2 | LaB₆ | Tint (ratio Blue/Violet) |
|---|---|---|---|---|
| A^{†} | 100 | | | |
| B^{†} | | 100 | | |
| C^{†} | | balance | 500ppm | |
| D^{†} | | balance | 250ppm | |
| E^{†} | | balance | 50ppm | |
| F^{†} | | balance | 50ppm | 24ppm (25/75) |
| G^{†} | | balance | 50ppm | 24ppm (50/50) |
| H^{†} | | balance | 250ppm | 130ppm (50/50) |

| | | | | |
|---|---|---|---|---|
| ^{†}not an example of the present invention | | | | |

**Table 2**

| Example | I^{†} | J^{†} | K^{†} | L^{†} | M^{†} | 1 | 2 | 3 | 4 |
|---|---|---|---|---|---|---|---|---|---|
| Core laver | | | | | | | | | |
| Composition, pbw | Ex B, 100 | Ex E, 100 | Ex B, 100 | Ex B, 100 | Ex B, 100 | Ex B, 100 | Ex B, 100 | Ex B, 100 | Ex B, 100 |
| Thickness, mm | 1.15 | 1.15 | 1.10 | 1.10 | 1.10 | 1.10 | 1.10 | 1.10 | 1.00 |
| 1^{st} layer | | | | | | | | | |
| Composition, pbw | - | - | Ex C, 100 | Ex D, 100 | Ex E, 100 | ExF, 100 | Ex G, 100 | ExH, 100 | Ex H, 100 |
| Thickness, mm | - | - | 0.05 | 0.05 | 0.05 | 0.05 | 0.05 | 0.05 | 0.15 |
| 2^{nd} layer | | | | | | | | | |
| Composition, pbw | Ex A, 100 | Ex A, 100 | Ex A, 100 | Ex A, 100 | Ex A, 100 | Ex A, 100 | Ex A, 100 | Ex A, 100 | Ex A, 100 |
| Thickness, mm | 0.05 | 0.05 | 0.05 | 0.05 | 0.05 | 0.05 | 0.05 | 0.05 | 0.05 |
| Before weathering | | | | | | | | | |
| % YI | 0.62 | 10.14 | 3.18 | 2.09 | 0.97 | -0.06 | -0.10 | -0.82 | -6.41 |
| % T | 90.8 | 67.5 | 71.6 | 79.8 | 83.8 | 82.9 | 83.6 | 79.5 | 69.9 |
| % Haze | 2.01 | 2.94 | 2.38 | 1.95 | 1.63 | 1.56 | 1.44 | 1.82 | 2.15 |
| Color | | | | | | | | | |
| L* | 95.6 | 84.3 | 88.1 | 91.9 | 93.4 | 93.2 | 93.3 | 91.3 | 86.9 |
| a* | -0.18 | -2.69 | -1.36 | -0.72 | -0.34 | -0.20 | -0.18 | -0.62 | -2.20 |
| b* | 0.39 | 6.18 | 2.11 | 1.32 | 0.61 | 0.05 | 0.02 | -0.15 | -2.01 |
| After weathering | | | | | | | | | |
| % YI | 4.53 | 12.96 | 6.61 | 5.71 | 4.77 | 2.84 | 3.00 | 2.49 | -3.18 |
| % T | 89.8 | 66.4 | 70.7 | 78.5 | 81.1 | 81.5 | 81.9 | 77.6 | 68.2 |
| % Haze | 2.23 | 3.28 | 2.76 | 2.16 | 1.99 | 1.79 | 1.70 | 2.22 | 2.32 |
| Color | | | | | | | | | |
| L* | 95.3 | 83.8 | 87.8 | 90.9 | 92.0 | 92.3 | 92.5 | 90.6 | 86.3 |
| a* | -0.72 | -3.05 | -1.75 | -1.16 | -0.81 | -0.73 | -0.70 | -1.20 | -2.65 |
| b* | 2.61 | 7.85 | 4.07 | 3.35 | 2.73 | 1.89 | 2.01 | 1.70 | -0.38 |
| ΔYI | 3.91 | 2.82 | 3.43 | 3.62 | 3.80 | 2.90 | 3.00 | 3.31 | 3.23 |
| ΔT | 1.0 | 1.1 | 0.9 | 1.4 | 2.8 | 0.9 | 0.8 | 0.7 | 0.6 |
| ΔHaze | 0.22 | 0.34 | 0.38 | 0.21 | 0.33 | 0.23 | 0.26 | 0.40 | 0.17 |
| Color | un-colored | dark green | green | green | green | uncolored | uncolored | slightly blue | slightly blue |
| Color acceptability | yes | no | no | no | no | yes | yes | yes | yes |
| UV acceptability | yes | yes | yes | yes | yes | yes | yes | yes | yes |
| IR Stability | | | | | | | | | |
| ΔT after 8 hr, °C | 0 | 10.2 | 6.3 | 5.3 | 2.7 | 7.2 | 6.4 | 8.6 | 12.9 |

| | | | | | | | | | |
|---|---|---|---|---|---|---|---|---|---|
| ^{†}not an example of the present invention | | | | | | | | | |

## Claims

1. A transparent multilayered carbonate article comprising:
(i) a core layer having a first surface and a second surface comprising a first carbonate polymer composition comprising a first carbonate polymer;
(ii) a first layer having a first surface and a second surface comprising a second carbonate polymer composition comprising a second carbonate polymer, one or more IR absorbing additive and one or more dye, wherein the first layer does not contain an UV absorbing additive;
and
(iii) a second layer having a first surface and a second surface comprising a third carbonate polymer composition comprising a third carbonate polymer, one or more UV absorbing additive and optionally an optical brightener, wherein the second layer does not contain an IR absorbing additive;
wherein the first surface of the first layer is in intimate contact with the first surface of the core layer and the second surface of the first layer is in intimate contact with the first surface of the second layer.

2. The transparent multilayered carbonate article of Claim 1 further comprising:
(iv) a third layer having a fist surface and a second surface comprising a fourth carbonate polymer composition comprising a fourth carbonate polymer, one or more UV absorbing additive, and optionally an optical brightener, wherein the third layer does not contain an IR absorbing additive;
wherein the first surface of the third layer is disposed upon and in intimate contact with the second surface of the core layer.

3. The transparent multilayered carbonate article of Claim 2 further comprising:
(v) a fourth layer having a fist surface and a second surface comprising a fifth carbonate polymer composition comprising a fifth carbonate polymer, one or more IR absorbing additive and one or more dye, wherein the fourth layer does not contain an UV absorbing additive;
wherein the fourth layer is disposed between the core layer and the third layer such that the first surface of the fourth layer is in intimate contact with the second surface of the core layer and the second surface of the fourth layer is in intimate contact with the first surface of the third layer.

4. The transparent multilayered article of Claim 1 wherein the IR absorbing additive is a metal boride; cesium tungsten oxide; antimony-doped tin oxide particles; zinc oxide particles containing at least one element selected from In, Ga, Al, or Sb; tin-doped indium oxide particles; a phthalocyanine-based composition; a naphthalocyanine-based composition; copper sulfide; or a copper ion compound.

5. The transparent multilayered article of Claim 1 wherein the IR absorbing additive is lanthanum boride, praseodymium boride, neodymium boride, cerium boride, gadolinium boride, terbium boride, dysprosium boride, holmium boride, yttrium boride, samarium boride, europium boride, erbium boride, thulium boride, ytterbium boride, lutetium boride, strontium boride, calcium boride, titanium boride, zirconium boride, hafnium boride, vanadium boride, tantalum boride, a chromium boride, a molybdenum boride, tungsten boride, or combinations thereof.

6. The transparent multilayered article of Claim 1 wherein the IR absorbing additive is lanthanum boride (LaB₆).

7. The transparent multilayered article of Claim 1 wherein the IR absorbing additive is present in an amount of from 0.02 ppm to 3000 ppm based on the total weight of the second carbonate polymer composition.

8. The transparent multilayered article of Claim 1 wherein the first, second, and/or third carbonate polymer composition comprises one or more dye wherein each dye is independently present in an amount of from 1 ppm to 10,000 ppm based on the total weight of the carbonate polymer composition for which it is in.

9. The transparent multilayered article of Claim 1 wherein the one or more UV absorbing additive in the third and optionally the first carbonate polymer composition is a benzotriazole compound, a triazine compound, a benzophenone compound, a cyanoacrylate compound, a salicylate compound, or combinations thereof.

10. The transparent multilayered article of Claim 1 wherein the one or more UV absorbing additive in the third and optionally the first carbonate polymer composition is 1,3-bis-[(2'-cyano-3',3'-diphenylacryloyl) oxy]-2,2-bis-[(2-cyano-3',3'-diphenylacryloyl) oxy] methyl) propane; 2,2'-methylen-bis-(6-{2H-benzotriazol-2-yl}-4-{1,1,3,3-tetramethylbutyl}-phenol); 2-(4,6-diphenyl-1,3,5-triazin-2-yl)-5-hexyloxyphenol, or combinations thereof.

11. The transparent multilayered article of Claim 1 wherein the one or more UV absorbing additive in the third and optionally the first carbonate polymer composition is independently present in an amount of from 1 to 15 weight percent based on the total weight of the third carbonate polymer composition.

12. The transparent multilayered article of Claim 1 wherein the one or more UV absorbing additive in the third and optionally the first carbonate polymer composition independently have a molecular weight equal to or greater than 400 g/mol.

13. The transparent multilayered article of Claim 1 wherein the first, second and/or third carbonate polymer composition comprises a thermal stabilizer wherein the thermal stabilizer is a phosphite, a phosphonate, a phosphine, a hindered amine, a hydroxylamine, a phenol, an acryloyl modified phenol, a hydroperoxide decomposer, a benzofuranone derivative, or combinations thereof.

14. The transparent multilayered article of Claim 1 wherein the first, second and/or third carbonate polymer composition comprises a mold release wherein the mold release is an aliphatic carboxylic acid, an ester of an aliphatic carboxylic acid and an aliphatic alcohol, an aliphatic hydrocarbon compound having a number-average molecular weight of 200 to 15000 or a polysiloxane-based silicone oil.

15. The transparent multilayered article of Claim 1 wherein the first, second and third carbonate polymer are a bis-phenol A polycarbonate.

16. The transparent multilayered article of Claim 1 wherein the first layer has a thickness of from 50 micrometers to 250 micrometers and the second layer has a thickness of from 30 micrometers to 70 micrometers.

17. A method for manufacturing a transparent multilayered article comprising the steps of:
(i) disposing onto a core layer having a first and second surface a first layer having a first and second surface, wherein the first surface of the core layer is in intimate contact with the first surface of the first layer, said core layer comprises a first carbonate polymer composition comprising a first carbonate polymer and said first layer comprises a second carbonate polymer composition comprising a second carbonate polymer, one or more IR absorbing additive, and one or more dye, wherein the first layer does not contain an UV absorbing additive;
and
(ii) disposing a second layer having a first and second surface onto the first layer wherein the first surface of the second layer is in intimate contact with the second surface of the first layer, said second layer comprises a third carbonate polymer composition comprising a third carbonate polymer composition comprising a third carbonate polymer, one or more UV absorbing additive, and optionally an optical brightener, wherein the second layer does not contain an IR absorbing additive.

18. The method of Claim 17 further comprising the step of:
(iii) disposing a third layer having a first and a second surface onto the second surface of the core layer opposite the surface whereon the first layer is disposed, said third layer comprises a fourth carbonate polymer composition comprising a fourth carbonate polymer, one or more UV absorbing additive, and optionally an optical brightener, wherein the third layer does not contain an IR absorbing additive.

19. The method of Claim 18 further comprising the step of:
(iv) disposing a fourth layer having a first and a second surface in between the core layer and the third layer such that the first surface of the fourth layer is in intimate contact with the second surface of the core layer opposite the surface whereon the first layer is disposed and the second surface of the fourth layer is in intimate contact with the first surface of the third layer, said fourth layer comprising a fifth carbonate polymer composition comprising a fifth carbonate polymer, one or more IR absorbing additive, and one or more dye, wherein the fourth layer does not contain an UV absorbing additive.

20. The methods of Claims 17, 18, or 19 wherein the disposing of the layers is conducted in a two or three roll mill,
by coextrusion,
by lamination, or
by a combination of coextrusion and lamination.

## Patentansprüche

1. Transparenter mehrschichtiger Carbonat-Gegenstand, der umfasst:
(i) eine Kernschicht, die eine erste Oberfläche und eine zweite Oberfläche aufweist, umfassend eine erste Carbonatpolymerzusammensetzung, die ein erstes Carbonatpolymer umfasst;
(ii) eine erste Schicht, die eine erste Oberfläche und eine zweite Oberfläche aufweist, umfassend eine zweite Carbonatpolymerzusammensetzung, die ein zweites Carbonatpolymer, einen oder mehrere IRabsorbierende Zusatzstoffe und einen oder mehrere Farbstoffe umfasst, worin die erste Schicht keinen UV-absorbierenden Zusatzstoff enthält;
und
(iii) eine zweite Schicht, die eine erste Oberfläche und eine zweite Oberfläche aufweist, umfassend eine dritte Carbonatpolymerzusammensetzung, die ein drittes Carbonatpolymer, einen oder mehrere UV-absorbierende Zusatzstoffe und wahlweise einen optischen Aufheller umfasst, worin die zweite Schicht keinen IR-absorbierenden Zusatzstoff enthält;
worin die erste Oberfläche der ersten Schicht in direktem Kontakt mit der ersten Oberfläche der Kernschicht ist und die zweite Oberfläche der ersten Schicht in direktem Kontakt mit der ersten Oberfläche der zweiten Schicht ist.

2. Transparenter mehrschichtiger Carbonat-Gegenstand gemäß Anspruch 1, der ferner umfasst:
(iv) eine dritte Schicht, die eine erste Oberfläche und eine zweite Oberfläche aufweist, umfassend eine vierte Carbonatpolymerzusammensetzung, die ein viertes Carbonatpolymer, einen oder mehrere UV-absorbierende Zusatzstoffe und wahlweise einen optischen Aufheller umfasst, worin die dritte Schicht keinen IR-absorbierenden Zusatzstoff enthält;
worin die erste Oberfläche der dritten Schicht auf und in direktem Kontakt mit der zweiten Oberfläche der Kernschicht angeordnet ist.

3. Transparenter mehrschichtiger Carbonat-Gegenstand gemäß Anspruch 2, der ferner umfasst:
(v) eine vierte Schicht, die eine erste Oberfläche und eine zweite Oberfläche aufweist, umfassend eine fünfte Carbonatpolymerzusammensetzung, die ein fünftes Carbonatpolymer, einen oder mehrere IR-absorbierende Zusatzstoffe und einen oder mehrere Farbstoffe umfasst, worin die vierte Schicht keinen UV-absorbierenden Zusatzstoff enthält;
worin die vierte Schicht zwischen der Kernschicht und der dritten Schicht angeordnet ist, so dass die erste Oberfläche der vierten Schicht in direktem Kontakt mit der zweiten Oberfläche der Kernschicht ist und die zweite Oberfläche der vierten Schicht in direktem Kontakt mit der ersten Oberfläche der dritten Schicht ist.

4. Transparenter mehrschichtiger Gegenstand gemäß Anspruch 1, worin der IR-absorbierende Zusatzstoff ein Metallborid; Cäsiumwolframoxid; Antimon-dotierte Zinnoxidteilchen; Zinkoxidteilchen, die zumindest ein Element enthalten, ausgewählt aus In, Ga, Al oder Sb; Zinn-dotierte Indiumoxidteilchen; eine Phthalocyaninbasierte Zusammensetzung; eine Naphthalocyanin-basierte Zusammensetzung; Kupfersulfid; oder eine Kupferionenverbindung ist.

5. Transparenter mehrschichtiger Gegenstand gemäß Anspruch 1, worin der IR-absorbierende Zusatzstoff Lanthanborid, Praseodymborid, Neodymborid, Cerborid, Gadoliniumborid, Terbiumborid, Dysprosiumborid, Holmiumborid, Yttriumborid, Samariumborid, Europiumborid, Erbiumborid, Thuliumborid, Ytterbiumborid, Lutetiumborid, Strontiumborid, Calciumborid, Titanborid, Zirkoniumborid, Hafniumborid, Vanadiumborid, Tantalborid, ein Chromborid, ein Molybdänborid,
Wolframborid oder Kombinationen davon ist.

6. Transparenter mehrschichtiger Gegenstand gemäß Anspruch 1, worin der IR-absorbierende Zusatzstoff Lanthanborid (LaB₆) ist.

7. Transparenter mehrschichtiger Gegenstand gemäß Anspruch 1, worin der IR-absorbierende Zusatzstoff in einer Menge von 0,02 ppm bis 3.000 ppm, basierend auf dem Gesamtgewicht der zweiten Carbonatpolymerzusammensetzung, vorhanden ist.

8. Transparenter mehrschichtiger Gegenstand gemäß Anspruch 1, worin die erste, zweite und/oder dritte Carbonatpolymerzusammensetzung einen oder mehrere Farbstoffe umfasst, worin jeder Farbstoff unabhängig in einer Menge von 1 ppm bis 10.000 ppm, basierend auf dem Gesamtgewicht der Carbonatpolymerzusammensetzung, in der er sich befindet, vorhanden ist.

9. Transparenter mehrschichtiger Gegenstand gemäß Anspruch 1, worin der eine oder die mehreren UV-absorbierenden Zusatzstoffe in der dritten und wahlweise der ersten Carbonatpolymerzusammensetzung eine Benzotriazolverbindung, eine Triazinverbindung, eine Benzophenonverbindung, eine Cyanoacrylatverbindung, eine Salicylatverbindung oder Kombinationen davon sind.

10. Transparenter mehrschichtiger Gegenstand gemäß Anspruch 1, worin der eine oder die mehreren UV-absorbierenden Zusatzstoffe in der dritten und wahlweise der ersten Carbonatpolymerzusammensetzung 1,3-Bis-[(2'-cyano-3',3'-diphenylacryloyl)oxy]-2,2-bis-[(2-cyano-3',3'-diphenylacryloyl)oxy]methyl)propan; 2,2'-Methylen-bis-(6-{2H-benzotriazol-2-yl}-4-{1,1,3,3-tetramethylbutyl)-phenol); 2-(4,6-Diphenyl-1,3,5-triazin-2-yl)-5-hexyloxyphenol oder Kombinationen davon sind.

11. Transparenter mehrschichtiger Gegenstand gemäß Anspruch 1, worin der eine oder die mehreren UV-absorbierenden Zusatzstoffe in der dritten und wahlweise der ersten Carbonatpolymerzusammensetzung unabhängig in einer Menge von 1 bis 15 Gew.%, basierend auf dem Gesamtgewicht der dritten Carbonatpolymerzusammensetzung, vorhanden sind.

12. Transparenter mehrschichtiger Gegenstand gemäß Anspruch 1, worin der eine oder die mehreren UV-absorbierenden Zusatzstoffe in der dritten und wahlweise der ersten Carbonatpolymerzusammensetzung unabhängig ein Molekulargewicht aufweisen, das gleich oder größer als 400 g/mol ist.

13. Transparenter mehrschichtiger Gegenstand gemäß Anspruch 1, worin die erste, zweite und/oder dritte Carbonatpolymerzusammensetzung einen thermischen Stabilisator umfasst, worin der thermische Stabilisator ein Phosphit, ein Phosphonat, ein Phosphin, ein gehindertes Amin, ein Hydroxylamin, ein Phenol, ein Acryloyl-modifiziertes Phenol, ein Hydroperoxid-Zersetzungsmittel, ein Benzofuranonderivat oder Kombinationen davon ist.

14. Transparenter mehrschichtiger Gegenstand gemäß Anspruch 1, worin die erste, zweite und/oder dritte Carbonatpolymerzusammensetzung ein Formtrennmittel umfasst, worin das Formtrennmittel eine aliphatische Carbonsäure, ein Ester einer aliphatischen Carbonsäure und eines aliphatischen Alkohols, eine aliphatische Kohlenwasserstoffverbindung, die ein zahlengemitteltes Molekulargewicht von 200 bis 15.000 aufweist, oder ein Polysiloxan-basiertes Silikonöl ist.

15. Transparenter mehrschichtiger Gegenstand gemäß Anspruch 1, worin das erste, zweite und/oder dritte Carbonatpolymer ein Bisphenol A-Polycarbonat sind.

16. Transparenter mehrschichtiger Gegenstand gemäß Anspruch 1, worin die erste Schicht eine Dicke von 50 µm bis 250 µm aufweist und die zweite Schicht eine Dicke von 30 µm bis 70 µm aufweist.

17. Verfahren zur Herstellung eines transparenten mehrschichtigen Gegenstands, das die Schritte umfasst von:
(i) Anordnen einer ersten Schicht, die eine erste und zweite Oberfläche aufweist, auf einer Kernschicht, die eine erste Oberfläche und zweite Oberfläche aufweist, worin die erste Oberfläche der Kernschicht in direktem Kontakt mit der ersten Oberfläche der ersten Schicht ist, die Kernschicht eine erste Carbonatpolymerzusammensetzung umfasst, die ein erstes Carbonatpolymer umfasst, und die erste Schicht eine zweite Carbonatpolymerzusammensetzung umfasst, die ein zweites Carbonatpolymer, einen oder mehrere IRabsorbierende Zusatzstoffe und einen oder mehrere Farbstoffe umfasst, worin die erste Schicht keinen UV-absorbierenden Zusatzstoff enthält;
und
(ii) Anordnen einer zweiten Schicht, die eine erste und zweite Oberfläche aufweist, auf der ersten Schicht, worin die erste Oberfläche der zweiten Schicht in direktem Kontakt mit der zweiten Oberfläche der ersten Schicht ist, die zweite Schicht eine dritte Carbonatpolymerzusammensetzung umfasst, die eine dritte Carbonatpolymerzusammensetzung umfasst, die ein drittes Carbonatpolymer, einen oder mehrere UV-absorbierende Zusatzstoffe und wahlweise einen optischen Aufheller umfasst, worin die zweite Schicht keinen IR-absorbierenden Zusatzstoff enthält.

18. Verfahren gemäß Anspruch 17, das ferner den folgenden Schritt umfasst:
(iii) Anordnen einer dritten Schicht, die eine erste und eine zweite Oberfläche aufweist, auf der zweiten Oberfläche der Kernschicht gegenüber der Oberfläche, auf der die erste Schicht angeordnet ist, wobei die dritte Schicht eine vierte Carbonatpolymerzusammensetzung umfasst, die ein viertes Carbonatpolymer, einen oder mehrere UV-absorbierende Zusatzstoffe und wahlweise einen optischen Aufheller umfasst, worin die dritte Schicht keinen IR-absorbierenden Zusatzstoff enthält.

19. Verfahren gemäß Anspruch 18, das ferner den folgenden Schritt umfasst:
(iv) Anordnen einer vierten Schicht, die eine erste und eine zweite Oberfläche aufweist, zwischen der Kernschicht und der dritten Schicht, so dass die erste Oberfläche der vierten Schicht in direktem Kontakt mit der zweiten Oberfläche der Kernschicht gegenüber der Oberfläche ist, auf der die erste Schicht angeordnet ist, und die zweite Oberfläche der vierten Schicht in direktem Kontakt mit der ersten Oberfläche der dritten Schicht ist, wobei die vierte Schicht eine fünfte Carbonatpolymerzusammensetzung umfasst, die ein fünftes Carbonatpolymer, einen oder mehrere IRabsorbierende Zusatzstoffe und einen oder mehrere Farbstoffe umfasst, worin die vierte Schicht keinen UV-absorbierenden Zusatzstoff enthält.

20. Verfahren gemäß Anspruch 17, 18 oder 19, worin das Anordnen der Schichten in einem Zwei- oder Dreiwalzwerk durch Coextrusion, durch Laminierung oder durch eine Kombination von Coextrusion und Laminierung durchgeführt wird.

## Revendications

1. Article de carbonate multicouche transparent comprenant :
(i) une couche centrale ayant une première surface et une seconde surface comprenant une première composition de polymère de carbonate comprenant un premier polymère de carbonate ;
(ii) une première couche ayant une première surface et une seconde surface comprenant une deuxième composition de polymère de carbonate comprenant un deuxième polymère de carbonate, un ou plusieurs additifs absorbant les rayons IR et un ou plusieurs colorants, dans lequel la première couche ne contient pas d'additif absorbant les rayons UV ;
et
(iii) une deuxième couche ayant une première surface et une seconde surface comprenant une troisième composition de polymère de carbonate comprenant un troisième polymère de carbonate, un ou plusieurs additifs absorbant les rayons UV et éventuellement un azureur optique, dans lequel la deuxième couche ne contient pas d'additif absorbant les rayons IR ;
dans lequel la première surface de la première couche est en contact intime avec la première surface de la couche centrale et la seconde surface de la première couche est en contact intime avec la première surface de la deuxième couche.

2. Article de carbonate multicouche transparent selon la revendication 1, comprenant en outre :
(iv) une troisième couche ayant une première surface et une seconde surface comprenant une quatrième composition de polymère de carbonate comprenant un quatrième polymère de carbonate, un ou plusieurs additifs absorbant les rayons UV et éventuellement un azureur optique, dans lequel la troisième couche ne contient pas d'additif absorbant les rayons IR ;
dans lequel la première surface de la troisième couche est placée sur et en contact intime avec la seconde surface de la couche centrale.

3. Article de carbonate multicouche transparent selon la revendication 2, comprenant en outre :
(v) une quatrième couche ayant une première surface et une seconde surface comprenant une cinquième composition de polymère de carbonate comprenant un cinquième polymère de carbonate, un ou plusieurs additifs absorbant les rayons IR et un ou plusieurs colorants, dans lequel la quatrième couche ne contient pas d'additif absorbant les rayons UV ;
dans lequel la quatrième couche est placée entre la couche centrale et la troisième couche de sorte que la première surface de la quatrième couche soit en contact intime avec la seconde surface de la couche centrale et que la seconde surface de la quatrième couche soit en contact intime avec la première surface de la troisième couche.

4. Article multicouche transparent selon la revendication 1, dans lequel l'additif absorbant les rayons IR est un borure métallique ; un oxyde de césium-tungstène ; des particules d'oxyde d'étain dopées avec de l'antimoine ; des particules d'oxyde de zinc contenant au moins un élément choisi parmi In, Ga, Al ou Sb ; des particules d'oxyde d'indium dopées avec de l'étain ; une composition à base de phtalocyanine ; une composition à base de naphtalocyanine ; du sulfure de cuivre ; un composé de cuivre ionique.

5. Article multicouche transparent selon la revendication 1, dans lequel l'additif absorbant les rayons IR est le borure de lanthane, le borure de praséodymium, le borure de néodymium, le borure de cérium, le borure de gadolinium, le borure de terbium, le borure de dysprosium, le borure d'holmium, le borure d'yttrium, le borure de samarium, le borure d'europium, le borure d'erbium, le borure de thulium, le borure d'ytterbium, le borure de lutétium, le borure de strontium, le borure de calcium, le borure de titane, le borure de zirconium, le borure d'hafnium, le borure de vanadium, le borure de tantale, le borure de chrome, le borure de molybdène, le borure de tungstène ou des combinaisons de ceux-ci.

6. Article multicouche transparent selon la revendication 1, dans lequel l'additif absorbant les rayons IR est le borure de lanthane (LaB₆).

7. Article multicouche transparent selon la revendication 1, dans lequel l'additif absorbant les rayons IR est présent en quantité de 0,02 ppm à 3000 ppm par rapport au poids total de la deuxième composition de polymère de carbonate.

8. Article multicouche transparent selon la revendication 1, dans lequel la première, la deuxième et/ou la troisième composition de polymère de carbonate comprennent un ou plusieurs colorants, dans lequel chaque colorant est indépendamment présent en quantité de 1 ppm à 10 000 ppm par rapport au poids total de la composition de polymère de carbonate dans laquelle il se trouve.

9. Article multicouche transparent selon la revendication 1, dans lequel les un ou plus d'additifs absorbant les rayons UV dans la troisième et éventuellement la première composition de polymère de carbonate sont un composé de benzotriazole, un composé de triazine, un composé de benzophénone, un composé de cyanoacrylate, un composé de salicylate ou des combinaisons de ceux-ci.

10. Article multicouche transparent selon la revendication 1, dans lequel les un ou plus d'additifs absorbant les rayons UV dans la troisième et éventuellement la première composition de polymère de carbonate sont le 1,3-bis-[(2'-cyano-3',3'-diphénylacryloyl)oxy]-2,2-bis[(2-cyano-3',3'-diphénylacryloyl)oxy]méthyl)-propane ; le 2,2'-méthylén-bis-(6-{2H-benzotriazol-2-yl}-4-{1,1,3,3-triméthylbutyl}phénol) ; le 2-(4,6-diphényl-1,3,5-triazin-2-yl)-5-hexyloxyphénol ou des combinaisons de ceux-ci.

11. Article multicouche transparent selon la revendication 1, dans lequel les un ou plus d'additifs absorbant les rayons UV dans la troisième et éventuellement la première composition de polymère de carbonate sont indépendamment présents en quantité de 1 à 15 pour cent en poids par rapport au poids total de la troisième composition de polymère de carbonate.

12. Article multicouche transparent selon la revendication 1, dans lequel les un ou plus d'additifs absorbant les rayons UV dans la troisième et éventuellement la première composition de polymère de carbonate ont indépendamment un poids moléculaire égal ou supérieur à 400 g/mol.

13. Article multicouche transparent selon la revendication 1, dans lequel la première, la deuxième et/ou la troisième composition de polymère de carbonate comprennent un stabilisant thermique, dans lequel le stabilisant thermique est un phosphite, un phosphonate, une phosphine, une amine empêchée , une hydroxylamine, un phénol, un phénol modifié par un groupement acryloyle, un agent de décomposition de type hydroperoxyde, un dérivé de benzofuranone ou des combinaisons de ceux-ci.

14. Article multicouche transparent selon la revendication 1, dans lequel la première, la deuxième et/ou la troisième composition de polymère de carbonate comprennent un agent de démoulage, dans lequel l'agent de démoulage est un acide carboxylique aliphatique, un ester d'un acide carboxylique aliphatique et d'un alcool aliphatique, un composé hydrocarboné aliphatique ayant un poids moléculaire moyen en nombre de 200 à 15 000 ou une huile de silicone à base de polysiloxane.

15. Article multicouche transparent selon la revendication 1, dans lequel le premier, le deuxième et le troisième polymère de carbonate sont un polycarbonate de bisphénol A.

16. Article multicouche transparent selon la revendication 1, dans lequel la première couche a une épaisseur de 50 micromètres à 250 micromètres et la deuxième couche a une épaisseur de 30 micromètres à 70 micromètres.

17. Procédé de fabrication d'un article multicouche transparent comprenant les étapes consistant à :
(i) disposer sur une couche centrale ayant une première surface et une seconde surface une première couche ayant une première surface et une seconde surface, dans lequel la première surface de la couche centrale est en contact intime avec la première surface de la première couche, ladite couche centrale comprend une première composition de polymère de carbonate comprenant un premier polymère de carbonate et ladite première couche comprend une deuxième composition de polymère de carbonate comprenant un deuxième polymère de carbonate, un ou plusieurs additifs absorbant les rayons IR et un ou plusieurs colorants, dans lequel la première couche ne contient pas d'additif absorbant les rayons UV ;
et
(ii) disposer une deuxième couche ayant une première surface et une seconde surface sur la première couche, dans lequel la première surface de la deuxième couche est en contact intime avec la seconde surface de la première couche, ladite deuxième couche comprend une troisième composition de polymère de carbonate comprenant une troisième composition de polymère de carbonate comprenant un troisième polymère de carbonate, un ou plusieurs additifs absorbant les rayons UV et éventuellement un azureur optique, dans lequel la deuxième couche ne contient pas d'additif absorbant les rayons IR.

18. Procédé selon la revendication 17, comprenant en outre l'étape consistant à :
(iii) disposer une troisième couche ayant une première surface et une seconde surface sur la seconde surface de la couche centrale opposée à la surface sur laquelle la première couche est disposée, ladite troisième couche comprend une quatrième composition de polymère de carbonate comprenant un quatrième polymère de carbonate, un ou plusieurs additifs absorbant les rayons UV et éventuellement un azureur optique, dans lequel la troisième couche ne contient pas d'additif absorbant les rayons IR.

19. Procédé selon la revendication 18, comprenant en outre l'étape consistant à :
(iv) disposer une quatrième couche ayant une première surface et une seconde surface entre la couche centrale et la troisième couche de telle sorte que la première surface de la quatrième couche soit en contact intime avec la seconde surface de la couche de noyau opposée à la surface sur laquelle la première couche est disposé&e et que la seconde surface de la quatrième couche soit en contact intime avec la première surface de la troisième couche, ladite quatrième couche comprenant une cinquième composition de polymère de carbonate comprenant un cinquième polymère de carbonate, un ou plusieurs additifs absorbant les rayons IR et un ou plusieurs colorants, dans lequel la quatrième couche ne contient pas d'additif absorbant les rayons UV.

20. Procédés selon les revendications 17, 18 ou 19, dans lesquels la disposition des couches est réalisée dans un laminoir à deux ou trois rouleaux, par coextrusion, par laminage ou par une combinaison de e coextrusion et de laminage.
